# EUROPEAN PATENT SPECIFICATION

(11) **EP 3 118 156 B1**
(45) Date of publication and mention of the grant of the patent: **16.12.2020**
(21) Application number: 15761556.8
(22) Date of filing: 05.03.2015
(51) Int. Cl.: C01B 3/38, H01M 8/04223, H01M 8/0612

(54) **HYDROGEN GENERATION APPARATUS, METHOD FOR DRIVING SAME, AND FUEL CELL SYSTEM**
WASSERSTOFFGENERATOR, VERFAHREN ZUM BETRIEB DAVON UND BRENNSTOFFZELLENSYSTEM
APPAREIL DE GÉNÉRATION D'HYDROGÈNE, PROCÉDÉ DE COMMANDE ASSOCIÉ ET SYSTÈME DE PILE À COMBUSTIBLE

(30) Priority: 11.03.2014 JP 2014047179; 15.10.2014 JP 2014210924
(43) Date of publication of application: 18.01.2017
(60) Divisional application: 20204586.0
(73) Proprietor: Panasonic Intellectual Property Management Co., Ltd., Osaka-shi, Osaka 540-6207 (JP)
(72) Inventor: KUSUYAMA, Takahiro, Osaka-shi Osaka 540-6207 (JP); NAKAJIMA, Tomoyuki, Osaka-shi Osaka 540-6207 (JP); HARADA, Chie, Osaka-shi Osaka 540-6207 (JP)
(74) Representative: Grünecker Patent- und Rechtsanwälte PartG mbB
(86) International application number: PCT/JP2015/001180
(87) International publication number: WO 2015/136896

(56) References cited:
- WO-A1-2012/165516
- WO-A1-2013/145500
- WO-A1-2013/145500
- JP-A- 2008 269 908
- JP-A- 2012 018 843
- US-A1- 2003 124 400

## Description

### TECHNICAL FIELD

The present invention relates to a hydrogen generation apparatus, a method for driving the same, and a fuel cell system. More specifically, the invention relates to a hydrogen generation apparatus having an activation mode of reducing power consumption in a case where activation power is supplied from an independent activation power supply, a method for driving the same, and a fuel cell system.

### BACKGROUND ART

In the related art, as a dispersive power generation apparatus capable of effectively using energy, a fuel cell cogeneration system (hereinafter, simply referred to as "fuel cell system") having high power generation efficiency and overall efficiency has attracted attention.

The fuel cell system includes a fuel cell as a main body of a power generation section. As the fuel cell, for example, a phosphoric acid type fuel cell, a molten carbonate type fuel cell, an alkali aqueous solution type fuel cell, a solid polymer type fuel cell, a solid electrolyte type fuel cell, and the like are used.

Among these fuel cells, the phosphoric acid type fuel cell and the solid polymer type fuel cell (abbreviated as "PEFC") are appropriately used as a fuel cell that constitutes a fuel cell system due to a relatively low operation temperature during power generation operation. Particularly, in the solid polymer type fuel cell, deterioration of an electrode catalyst is less in comparison to the phosphoric acid type fuel cell, and dissipation of an electrolyte does not occur, and thus the solid polymer type fuel cell is appropriately used, particularly, in a use such as a portable electronic apparatus and an electric vehicle.

In a lot of fuel cells, for example, a phosphoric acid type fuel cell and the solid polymer type fuel cell, hydrogen is used as a fuel during power generation operation. However, in the fuel cells, typically, a hydrogen supply unit that is necessary during the power generation operation is not serviced as an infrastructure.

Accordingly, so as to obtain power by a fuel cell system including the phosphoric acid type fuel cell or the solid polymer type fuel cell, it is necessary to generate hydrogen as a fuel in an installation location of the fuel cell system.

As a method of generating hydrogen that is supplied to the fuel cell, a reforming reaction is typically used. For example, the reforming reaction is a reaction of allowing a town gas that becomes a raw material, and water vapor to react with each other at a high temperature of approximately 600°C to 700°C by using a Ni-based or Ru-based reforming catalyst so as to generate a hydrogen-containing gas including hydrogen as a main component.

Typically, thermal energy, which is necessary for the reforming reaction, is obtained by combusting a fuel-off gas in a fuel cell with a burner. On the other hand, there is also suggested a configuration in which an electric heater configured to heat the hydrogen generation apparatus is provided, and during activation, the burner is operated, and the electric heater is operated by using power of a system power supply, thereby raising a temperature of the hydrogen generation apparatus (for example, refer to PTL 1).

However, in the fuel cell system as described above, in a case of independent activation during shutting-off of the system power supply, that is, a so-called power failure state (activation of the system without using the system power supply), it is necessary to operate auxiliary machinery necessary for power generation by separately using an independent activation power supply (storage battery and the like).

However, during the independent activation, it cannot be said that there is a room for a residual amount of the independent activation power supply, and the capacity is limited, and thus it is preferable to reduce power consumption during activation. With regard to this problem, in a case of activation with power supplied from the independent activation power supply, there is also suggested a configuration in which a combustor is operated to raise a temperature without activating the heater (for example, refer to PTL 2).

However, in a technology that is suggested in PTL 2, in a case of the activation with power supplied from the independent activation power supply, since the combustor is operated to raise a temperature without activation of the heater, time taken to supply power from the independent activation power supply to the auxiliary machinery is lengthened, and power necessary for activation increases. Accordingly, there is a problem in that the size of the independent activation power supply increases, and thus the cost increases.
JP 2008 269908 A relates to a fuel cell power generation device and a starting method thereof.

### Citation List Patent

### Literature

PTL I: JPH10-214632 A
PTL 2. JP2012038559 A

### SUMMARY OF THE INVENTION

The invention has been made in consideration of the above-described problem, and an object thereof is to suppress power consumption during activation with power supplied from an independent activation power supply.

According to the invention, there is provided a hydrogen generation apparatus as defined in claim 1.

The fuel cell according to the invention is defined in claims 10 and 11. A method for operating a hydrogen generation apparatus is defined in claim 12. Further advantageous embodiments are defined in the dependent claims.

According to the above-described configuration, the amount of heat, which is input to the hydrogen generation apparatus, is increased during the special activation, and thus a temperature-rising rate to an appropriate temperature of a catalyst increases. Accordingly, it is possible to shorten power supply time from the independent activation power supply to the auxiliary machinery and it is possible to decrease the amount of power supplied. As a result, it is possible to miniaturize the independent activation power supply.

So as to suppress power consumption in the hydrogen generation apparatus, it is effective to initiate power generation at an early time so as to supply power that is consumed in the auxiliary machinery. Accordingly, it is necessary to generate a hydrogen-containing gas with quality capable of being used in a fuel cell, and it is necessary to raise a temperature of a catalyst that is mounted on the hydrogen generation apparatus to an appropriate temperature.

According to the hydrogen generation apparatus, a method for driving the same, and the fuel cell system, during activation with power supply from an independent activation power supply, it is possible to raise the temperature of the catalyst at an early time in comparison to the related art, and thus it is possible to shorten activation time. Accordingly, it is possible to reduce the amount of power that is consumed in the auxiliary machinery, and thus it is possible to miniaturize the independent activation power supply.

### BRIEF DESCRIPTION OF DRAWINGS

FIG. 1 is a block diagram illustrating an example of a schematic configuration of a hydrogen generation apparatus according to a first embodiment of the invention.
FIG. 2 is a flowchart illustrating an example of an operation of the hydrogen generation apparatus according to the first embodiment of the invention.
FIG. 3 is a flowchart illustrating an example of a parameter changing operation during special activation of the hydrogen generation apparatus according to the first embodiment of the invention.
FIG. 4 is a flowchart illustrating an example of the parameter changing operation during the special activation of a hydrogen generation apparatus according to a first modification example of the first embodiment of the invention.
FIG. 5 is a flowchart illustrating an example of the parameter changing operation during typical activation of the hydrogen generation apparatus according to the first modification example of the first embodiment of the invention.
FIG. 6 is a flowchart illustrating an example of a second modification example of the parameter changing operation during the special activation of the hydrogen generation apparatus according to the first embodiment of the invention.
FIG. 7 is a flowchart illustrating an example of a second modification example of the parameter changing operation during the typical activation of the hydrogen generation apparatus according to the first embodiment of the invention.
FIG. 8 is a flowchart illustrating an example of a third modification example of the parameter changing operation during the special activation of the hydrogen generation apparatus according to the first embodiment of the invention.
FIG. 9 is a flowchart illustrating an example of a fourth modification example of the parameter changing operation during the special activation of the hydrogen generation apparatus according to the first embodiment of the invention.
FIG. 10 is a flowchart illustrating an example of an operation of a hydrogen generation apparatus according to a second embodiment of the invention.
FIG. 11 is a flowchart illustrating an example of the parameter changing operation during the special activation of the hydrogen generation apparatus according to the second embodiment of the invention.
FIG. 12 is a flowchart illustrating an example of a first modification example of the parameter changing operation during the special activation of the hydrogen generation apparatus according to the second embodiment of the invention.
FIG. 13 is a flowchart illustrating an example of an operation of a hydrogen generation apparatus according to the third embodiment of the invention.
FIG. 14 is a flowchart illustrating an example of the parameter changing operation during the special activation of the hydrogen generation apparatus according to the third embodiment of the invention.
FIG. 15 is a flowchart illustrating an example of a first modification example of the parameter changing operation during the special activation of the hydrogen generation apparatus according to the third embodiment of the invention.
FIG. 16 is a flowchart illustrating an example of a second modification example of the parameter changing operation during the special activation of the hydrogen generation apparatus according to the third embodiment of the invention.
FIG. 17 is a flowchart illustrating an example of a third modification example of the parameter changing operation during the special activation of the hydrogen generation apparatus according to the third embodiment of the invention.
FIG. 18 is a block diagram illustrating an example of a schematic configuration of a fuel cell system according to a fourth embodiment of the invention.
FIG. 19 is a flowchart illustrating an example of an operation of the fuel cell system according to the fourth embodiment of the invention.
FIG. 20 is a flowchart illustrating an example of a first modification example of the operation of the fuel cell system according to the fourth embodiment of the invention.

### DESCRIPTION OF EMBODIMENTS

Hereinafter, the invention will be described in more detail with reference to embodiments. However, the invention is not limited by the embodiments.

### (First Embodiment)

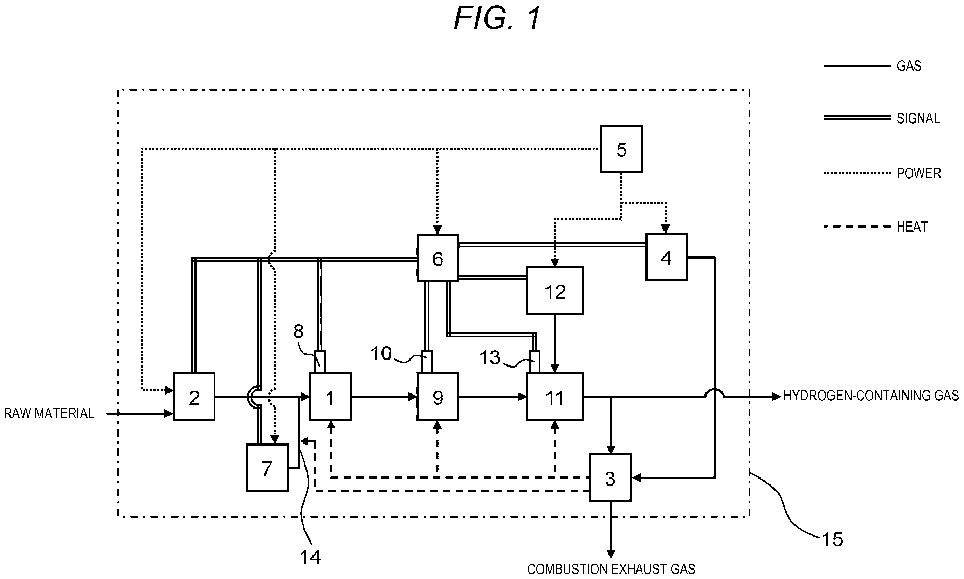

FIG. 1 is a block diagram illustrating an example of a schematic configuration of hydrogen generation apparatus 15 according to a first embodiment of the invention.

In an example illustrated in FIG. 1, hydrogen generation apparatus 15 of this embodiment includes reformer 1, raw material supply device 2, combustor 3, combustion air supply device 4, independent activation power supply 5, controller 6, water supply device 7, reformer temperature detector 8, CO reducer 9, CO reducer temperature detector 10, selective oxidizer 11, oxygen-containing gas supply device 12, and selective oxidizer temperature detector 13.

Reformer 1 generates a hydrogen-containing gas by using a raw material gas. Specifically, the raw material gas performs a reforming reaction in a reforming catalyst inside reformer 1 to generate the hydrogen-containing gas. The reforming reaction may be any type, and for example, a water vapor reforming reaction, an auto-thermal reaction, a partial oxidation reaction, and the like are used.

In addition, although not illustrated in FIG. 1, an apparatus, which is necessary for each reforming reaction, is appropriately provided. For example, in a case where the reforming reaction is the water vapor reforming reaction, an evaporate that generates water vapor, and water supply device 7 that supplies water to the evaporator are provided. In a case where the reforming reaction is the auto-thermal reaction, hydrogen generation apparatus 15 is further provided with an air supply device that supplies air to reformer 1.

Raw material supply device 2 supplies a gas such as a city gas, a natural gas, and an LPG gas which include methane as a main component and which include an organic compound constituted by at least carbon and hydrogen to at least one of reformer 1 and combustor 3. In addition, raw material supply device 2 is provided with a flow rate adjusting function so as to adjust a raw material flow rate to an appropriately necessary flow rate. Examples of raw material supply device 2 include a pump, and the like.

Combustor 3 combusts the raw material gas, or the hydrogen-containing gas or the raw material gas after reformer 1 so as to heat reformer 1, CO reducer 9, and selective oxidizer 11. In addition, heating may be direct heating with flames, or indirect heating with a combustion exhaust gas.

In addition, in FIG. 1, combustor 3 is disposed downstream of reformer 1. However, the invention is not limited to this configuration, and combustor 3 and reformer 1 may be disposed in parallel with each other by diverging a raw material gas path. Examples of combustor 3 include a burner and the like.

Combustion air supply device 4 supplies combustion air, which is necessary in combustor 3 during combustion of the raw material gas or the hydrogen-containing gas after reformer 1, to combustor 3. Examples of combustion air supply device 4 include a blower and the like.

In a case where power is not supplied from a first power supply, independent activation power supply 5 supplies power to auxiliary machinery to activate hydrogen generation apparatus 15. Examples of independent activation power supply 5 include a secondary battery. In addition, as the first power supply, for example, a commercial power supply (system power supply), a solar cell, and the like can be used.

In addition, during typical activation, it is possible to employ a configuration in which power is supplied to the auxiliary machinery from only the first power supply, a configuration in which power is supplied to the auxiliary machinery from the first power supply and independent activation power supply 5, or a configuration in which power of the first power supply is supplied to the auxiliary machinery through independent activation power supply 5.

Controller 6 may have a control function, and includes an operation processing unit and a storage unit that stores a control program. Examples of the operation processing unit include an MPU and a CPU. Examples of the storage unit include a memory. Controller 6 may be configured as a single controller that performs centralized control, or may be configured as a plurality of controllers which perform decentralized control in cooperation with each other.

Water supply device 7 supplies water to hydrogen generation apparatus 15. In addition, it is preferable that the water to be supplied is in a water vapor state. Accordingly, water supply device downstream flow passage 14, which is disposed downstream of water supply device 7, is heated by combustor 3, a heater, or a combustion exhaust gas, and thus water vapor is generated. Examples of water supply device 7 include a water pump, and the like.

Reformer temperature detector 8 detects a temperature of reformer 1. In addition, it is preferable that reformer temperature detector 8 is configured to directly measure a catalyst temperature inside reformer 1, but it is also possible to employ a configuration in which a temperature detection unit is provided on an outer side of reformer 1 or in the vicinity thereof as long as it is possible to estimate the catalyst temperature by using a value that is detected. Examples of reformer temperature detector 8 include a thermocouple, a thermistor, and the like.

CO reducer 9 reduces CO in the hydrogen-containing gas emitted from reformer 1 through a shift reaction, an oxidation reaction, or a methanation reaction.

CO reducer temperature detector 10 detects a temperature of CO reducer 9. In addition, it is preferable that CO reducer temperature detector 10 is configured to directly measure the catalyst temperature inside CO reducer 9, but it is possible to employ a configuration in which a temperature detection unit is provided on an outer side of CO reducer 9 or in the vicinity thereof as long as it is possible to estimate the catalyst temperature by using a value that is detected. Examples of CO reducer temperature detector 10 include a thermocouple, a thermistor, and the like.

Selective oxidizer 11 additionally reduces carbon monoxide in a gas through an oxidation reaction. It is preferable that an outer wall of selective oxidizer 11 is formed from, for example, a metal such as stainless steel.

Oxygen-containing gas supply device 12 supplies an oxygen-containing gas to selective oxidizer 11, and examples thereof include a blower.

Selective oxidizer temperature detector 13 detects a temperature of selective oxidizer 11. In addition, it is preferable that selective oxidizer temperature detector 13 is configured to directly measure a catalyst temperature inside selective oxidizer 11, but it is also possible to employ a configuration in which a temperature detection unit is provided on an outer side of selective oxidizer 11 or in the vicinity thereof as long as it is possible to estimate the catalyst temperature by using a value that is detected. Examples of selective oxidizer temperature detector 13 include a thermocouple, a thermistor, and the like.

### [Operation]

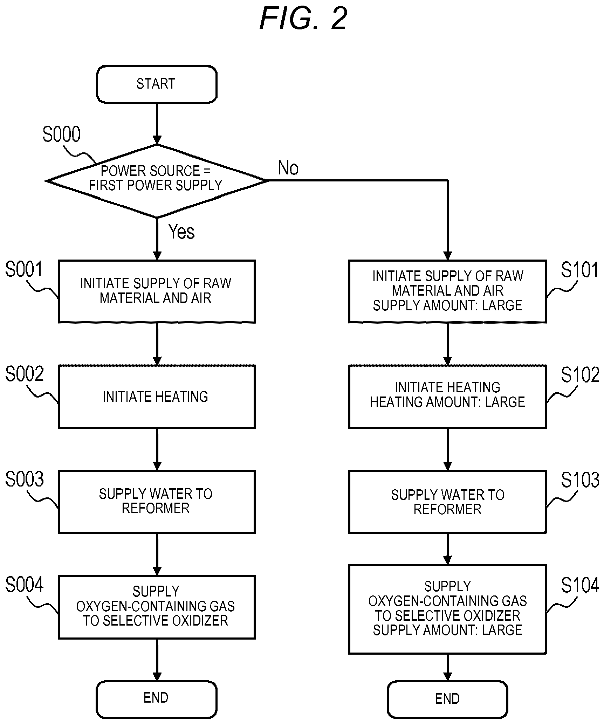

Next, an operation of driving hydrogen generation apparatus 15 according to the first embodiment of the invention will be described in detail with reference to FIG. 2.

FIG. 2 is a flowchart illustrating an example of an operation of hydrogen generation apparatus 15 according to the first embodiment of the invention.

(Start) First, an activation command is input to controller 6.

(Step S000) Controller 6 that receives the activation command detects whether power is being supplied from the first power supply or power is being supplied from only independent activation power supply 5. In a case where power is being supplied from the first power supply (YES in S000), a process transitions to step S001 of a typical activation operation, and in a case where power is being supplied from only independent activation power supply 5 (NO in S000), the process transitions to step S101 of a special activation operation.

(Step S001) Power is supplied to raw material supply device 2 and combustion air supply device 4 from the first power supply in accordance with the command of controller 6 that detects power supply from the first power supply. First, after combustion air is supplied in an amount corresponding to the amount of a raw material gas supplied to combustor 3, the raw material gas is supplied so that a heating amount becomes a second heating amount (for example, 500 W). Here, the heating amount is the amount of heat with which the hydrogen generation apparatus is heated through combustion of the raw material gas and the combustion air in the combustor.

(Step S002) In combustor 3, the raw material gas that is ignited by an ignition device is combusted in combination with the combustion air. Heat that is generated through combustion in combustor 3 is supplied to reformer 1, CO reducer 9, and selective oxidizer 11 to raise the temperature of reformer 1, CO reducer 9, and selective oxidizer 11. In addition, heating with a heater may be simultaneously used in combination.

(Step S003) After reformer temperature detector 8 detects that the temperature of reformer 1 is a second temperature (for example, 200°C), water is supplied from water supply device 7 at a second flow rate (for example, 5 cc/min), and thus the reforming reaction is initiated. In addition, in a case where at least any one of CO reducer temperature detector 10 and selective oxidizer temperature detector 13 exists, a threshold value may be set in advance with respect to a temperature measured by any one of CO reducer temperature detector 10 and selective oxidizer temperature detector 13 to initiate water supply. For example, the threshold value in this case may be set to 120°C in CO reducer temperature detector 10, and 110°C in selective oxidizer temperature detector 13.

(Step S004) In a case where selective oxidizer temperature detector 13 detects a predetermined temperature, for example, 100°C, an oxygen-containing gas is supplied from oxygen-containing gas supply device 12 to selective oxidizer 11 at an eighth flow rate (for example, 0.6 L/min).

(Step S101) Power is supplied from independent activation power supply 5 to raw material supply device 2 and combustion air supply device 4 in accordance with a command of controller 6 that detects power supply from independent activation power supply 5. First, after combustion air is supplied to combustor 3 in correspondence with the amount of the raw material gas, the raw material gas is supplied so that a heating amount becomes a first heating amount (for example, 700 W) that is greater than the second heating amount (for example, 500 W). Here, the heating amount is the amount of heat with which the hydrogen generation apparatus is heated through combustion of the raw material gas and the combustion air in the combustor.

(Step S102) In combustor 3, the raw material gas that is ignited by an ignition device is combusted in combination with the combustion air, heats reformer 1 with flames, and heats CO reducer 9, selective oxidizer 11, and water supply device downstream flow passage 14 through heat exchange with a combustion exhaust gas. In addition, heating with a heater may be simultaneously used in combination.

According to this, in comparison to the typical activation through step S001 and step S002, the raw material gas is supplied to combustor 3 with a relatively greater heating amount and is combusted. Heat that is generated through combustion in combustor 3 is supplied to reformer 1, CO reducer 9, selective oxidizer 11, and water supply device downstream flow passage 14. According to this, reformer 1, CO reducer 9, and selective oxidizer 11 are heated with a heating amount greater than a heating amount during the typical activation, and thus it is possible to quicken the temperature rise.

(Step S103) In a case where reformer temperature detector 8 detects that the temperature of reformer 1 becomes equal to or higher than the second temperature (for example, 200°C), or after a second time (for example, 15 minutes) or longer has elapsed from combustion initiation of combustor 3, water is supplied from water supply device 7 at the second flow rate (for example, 5 cc/mm), and thus the reforming reaction is initiated.

In addition, in a case where at least any one of CO reducer temperature detector 10 and selective oxidizer temperature detector 13 exists, a threshold value may be set in advance with respect to a temperature measured by any one of CO reducer temperature detector 10 and selective oxidizer temperature detector 13 to initiate water supply. For example, the threshold value in this case may be set to 120°C in CO reducer temperature detector 10, and 110°C in selective oxidizer temperature detector 13.

(Step S104) In a case where the temperature of selective oxidizer temperature detector 13 is detected as a predetermined temperature of 100°C, or when a predetermined time (for example, 15 minutes) has elapsed from combustion initiation of combustor 3, the oxygen-containing gas is supplied from oxygen-containing gas supply device 12 to selective oxidizer 11 at a seventh flow rate (for example, 0.7 L/min) that is greater than the eighth flow rate (for example, 0.6 L/min).

In a selective oxidation catalyst, oxygen is supplied in an amount corresponding to the amount of carbon monoxide in the hydrogen-containing gas, and thus control is performed in order for the oxidation reaction of hydrogen not to be excessively conducted. The amount of the oxygen-containing gas is further increased in comparison to the typical activation, and thus the oxidation reaction of hydrogen in selective oxidizer 11 is promoted and the catalyst is heated due to reaction heat. As a result, a temperature rise of selective oxidizer 11 becomes faster in comparison to step S004.

(End) The temperatures of reformer 1, CO reducer 9, and selective oxidizer 11 of hydrogen generation apparatus 15 reach predetermined temperatures (for example, 550°C in reformer 1, 250°C in CO reducer 9, and 160°C in selective oxidizer 11), respectively, and hydrogen is supplied to a hydrogen using device in hydrogen generation apparatus 15.

Through the above-described operation, during the special activation in which power is supplied from only independent activation power supply 5, it is possible to quicken the temperature rise of hydrogen generation apparatus 15 in comparison to the typical activation in which power is supplied from the first power supply. According to this, it is possible to quicken the temperature rise of hydrogen generation apparatus 15, and thus it is possible to shorten the time taken to supply power from independent activation power supply 5 to auxiliary machinery. Accordingly, it is possible to miniaturize independent activation power supply 5.

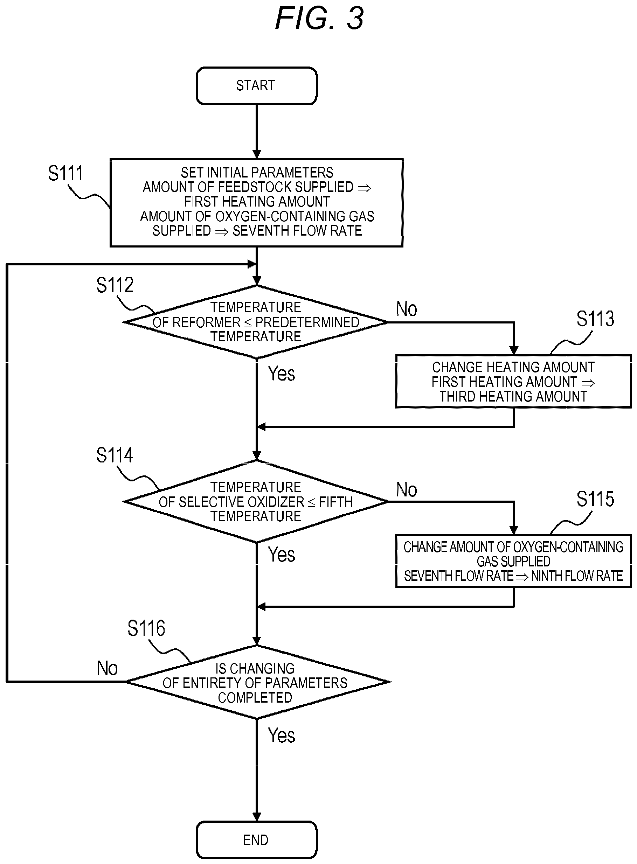

FIG. 3 is a flowchart illustrating an example of a parameter changing operation during the special activation of hydrogen generation apparatus 15 according to the first embodiment of the invention.

This flow determines a combustion amount and the amount of the oxygen-containing gas supplied in accordance with the temperature of reformer 1 and selective oxidizer 11 in a case of transitioning to a special activation operation subsequent to step S101 illustrated in FIG. 2.

(Step S111) As initial values, the amount of raw material gas supplied from raw material supply device 2 is set to the first heating amount (for example, 700 W), and the amount of the oxygen-containing gas supplied from oxygen-containing gas supply device 12 is set to the seventh flow rate (for example, 0.7 L/min), respectively.

(Step S112) In a case where the temperature of reformer 1 becomes equal to or higher than a predetermined temperature (NO in S112), the process transitions to step S113. In a case where this condition is not satisfied (YES in S112), the process transitions to step S114. Here, the predetermined temperature represents a temperature at which reformer 1 can initiate a water vapor reforming reaction, and the predetermined temperature is 250°C or higher and preferably 350°C or higher.

(Step S113) Controller 6 controls a heating amount during combustion in combustor 3 to a third heating amount (for example, 400 W) that is less than the first heating amount (for example, 700 W). In addition, the third heating amount may be the same as the second heating amount (for example, 500 W).

According to this, it is possible to further limit a continuous heating period with a high heating amount in comparison to the typical activation. Accordingly, it is possible to suppress an excessive temperature rise of reformer 1 due to heating with a higher heating amount in comparison to the typical activation, thermal damage due to over-heating of a structure body of hydrogen generation apparatus 15, performance deterioration due to a variation in a heated portion which is caused by a flame length difference from the typical activation, and the like.

(Step S114) In a case where the temperature of selective oxidizer 11 becomes equal to or higher than a fifth temperature (for example, 150°C) (NO in S114), the process transitions to step S115. In a case where this condition is not satisfied (YES in S114), the process transitions to step S116.

(Step S115) Controller 6 controls the amount of oxygen-containing gas supplied from oxygen-containing gas supply device 12 to a ninth flow rate (for example, 0.5 L/min) that is less than the seventh flow rate (for example, 0.7 L/min). In addition, the ninth flow rate may be the same as the eighth flow rate (for example, 0.6 L/min).

According to this, since the amount of the oxygen-containing gas that is supplied to selective oxidizer 11 decreases at the point of time at which the temperature of selective oxidizer 11 is sufficiently raised, the oxidation reaction of hydrogen in the hydrogen-containing gas on a selective oxidation catalyst is suppressed, and thus it is possible to suppress a reduction of hydrogen due to the oxidation reaction. According to this, a hydrogen concentration in the hydrogen-containing gas increases, and thus it is possible to increase the amount of hydrogen supplied to the hydrogen using device, and it is possible to prevent selective oxidizer 11 from being over-heated due to the oxidation reaction.

Here, when selective oxidizer 11 is over-heated, not only the oxidation reaction but also the methanation reaction of carbon dioxide progresses. The reactions are exothermic reactions, and thus the temperature of selective oxidizer 11 rises at an accelerated rate through the reactions, and thus it enters a so-called temperature runaway state.

When it enters the temperature runaway state, hydrogen in the hydrogen-containing gas is consumed by carbon dioxide, and thus there is a problem in that a hydrogen concentration decreases, but also the selective oxidation catalyst thermally deteriorates. When this step is performed, it is possible to suppress the oxidation reaction of hydrogen, and it is also possible to suppress the methanation reaction of carbon dioxide. As a result, it is possible to attain an effect of suppressing thermal deterioration of the selective oxidation catalyst.

(Step S116) Controller 6 determines whether or not the entirety of parameters are changed into an initial state. In a case where the entirety of parameters are changed (YES in S116), the process transitions to an end step, and in a case where the entirety of parameters are not changed (NO in S116), the process transitions to S112.

(End) All operation parameters of hydrogen generation apparatus 15 are returned to a typical state, and control is performed in accordance with a command relating to a hydrogen generation amount.

Through the above-described operations, it is possible to suppress thermal damage of a structure body which occurs during the special activation, it is possible to suppress a decrease in the hydrogen concentration in the hydrogen-containing gas, and it is possible to suppress thermal deterioration of the selective oxidation catalyst.

In the first embodiment, when combining the above-described operations, hydrogen generation apparatus 15 of the first embodiment can further quicken the temperature rise of hydrogen generation apparatus 15 during the special activation in which power is supplied from only independent activation power supply 5 in comparison to the typical activation in which power is supplied from the first power supply. In addition, it is possible to suppress the thermal damage of a structure body and the decrease in the hydrogen concentration in the hydrogen-containing gas due to the increase in the heating amount.

According to this, it is possible to quickly activate hydrogen generation apparatus 15, and it is possible to shorten the time taken to supply power from independent activation power supply 5 to the auxiliary machinery, and thus it is possible to miniaturize independent activation power supply 5.

### (First Modification Example of First Embodiment)

Next, description will be given of a first modification example of the first embodiment of the invention.

Hydrogen generation apparatus 15 according to the first modification example of the first embodiment of the invention has the same configuration as that of hydrogen generation apparatus 15 of the first embodiment illustrated in FIG. 1. That is, hydrogen generation apparatus 15 according to this modification example includes reformer 1, raw material supply device 2, combustor 3, combustion air supply device 4, independent activation power supply 5, controller 6, water supply device 7, reformer temperature detector 8, CO reducer 9, CO reducer temperature detector 10, selective oxidizer 11, oxygen-containing gas supply device 12, and selective oxidizer temperature detector 13. In addition, in a case where power is supplied from the first power supply during the special activation, it transitions to the typical activation, and in a case where power supply from the first power supply is stopped during the typical activation, it transitions to the special activation.

The above-described configuration is the same as in the first embodiment, and thus description thereof will not be repeated.

### [Operation]

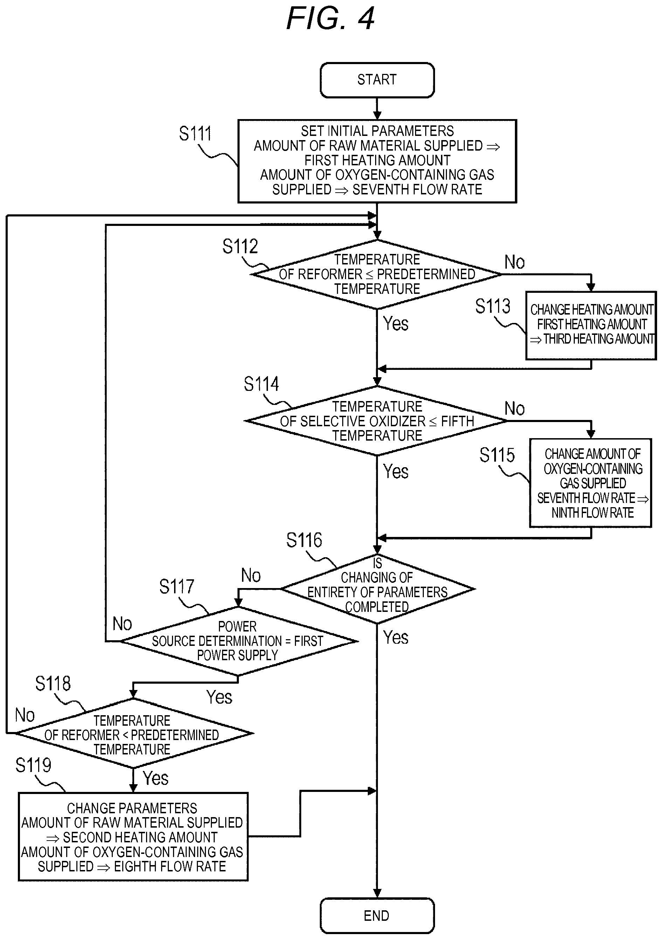

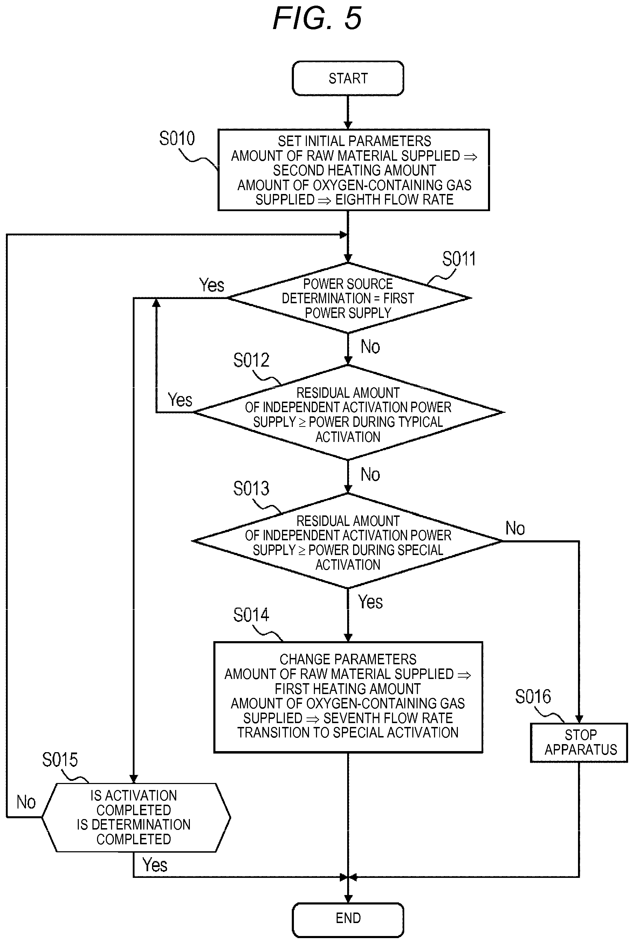

Next, an operation of driving hydrogen generation apparatus 15 of the first modification example of the first embodiment of the invention will be described in detail with reference to FIGS. 4 and 5.

FIG. 4 is a flowchart illustrating an example of the parameter changing operation during the special activation of hydrogen generation apparatus 15 according to the first modification example of the first embodiment of the invention.

In this flow, step S117, step S118, and step S119 are added to the flowchart of the first embodiment illustrated in FIG. 3. The other steps are the same as in the first embodiment illustrated in FIG. 3, and detailed description thereof will not be repeated.

(Step S117) In step S116, when it is determined that changing of all parameters is not completed (NO in S116), controller 6 detects whether power is being supplied from the first power supply, or power is being supplied from only independent activation power supply 5. In a case where power is being supplied from the first power supply (YES in S117), the process transitions to step S118, and in a case where power is being supplied from only independent activation power supply 5 (NO in S117), the process transitions to step S112.

(Step S118) In a case where the temperature of reformer 1 is lower than a predetermined temperature (for example, 250°C) (YES in S118), the process transitions to step S119. In a case where this condition is not satisfied (NO in S118), the process transitions to step S112.

(Step S119) The amount of the raw material gas supplied from raw material supply device 2 is set to the second heating amount (for example, 500 W), and the amount of oxygen-containing gas supplied from oxygen-containing gas supply device 12 is set to the eighth flow rate (for example, 0.6 L/min), respectively.

According to this, when power is supplied from the first power supply, the heating amount and the amount of the oxygen-containing gas supplied are returned to values during the typical activation. In the special activation of this embodiment, since hydrogen generation apparatus 15 is heated with a high heating amount during the special activation, the temperature of reformer 1, which exists in the vicinity of combustor 3 of hydrogen generation apparatus 15, is raised at a higher speed in comparison to the typical activation, and thus thermal damage to the structure body increases. Accordingly, when reducing the number of times of the special activation as much as possible, it is possible to reduce the thermal damage to the structure body.

FIG. 5 is a flowchart illustrating an example of the parameter changing operation during typical activation of hydrogen generation apparatus 15 according to the first modification example of the first embodiment of the invention.

When transitioning to the typical activation operation subsequent to step S001 illustrated in FIG. 2, this flow is configured to determine the combustion amount and the amount of the oxygen-containing gas supplied in accordance with a residual amount of the independent activation power supply and a power source.

(Step S010) As initial values, the amount of the raw material gas supplied from raw material supply device 2 is set to the second heating amount (for example, 500 W), and the amount of the oxygen-containing gas supplied from oxygen-containing gas supply device 12 is set to the eighth flow rate (for example, 0.6 L/min), respectively.

(Step S011) Controller 6 detects whether power is being supplied from the first power supply, or power is being supplied from only independent activation power supply 5. In a case where power is being supplied from the first power supply (YES in S011), the process transitions to step S015, and in a case where power is being supplied from only independent activation power supply 5 (NO in S011), the process transitions to step S012 of the special activation operation.

(Step S012) Controller 6 detects a residual amount of power of independent activation power supply 5. In a case where a residual amount of power of independent activation power supply 5 is equal to or greater than the amount of power necessary to complete the typical activation (YES in S012), the process transitions to step S015. In a case where this condition is not satisfied (NO in S012), the process transitions to step S013.

(Step S013) Controller 6 detects the residual amount of power of independent activation power supply 5. In a case where the residual amount of power of independent activation power supply 5 is equal to or greater than the amount of power necessary to complete the special activation (YES in S013), the process transitions to step S014. In a case where this condition is not satisfied (NO in S013), the process transitions to step S016.

(Step S014) The amount of raw material gas supplied from raw material supply device 2 is set to the first heating amount (for example, 700 W), and the amount of the oxygen-containing gas supplied from oxygen-containing gas supply device 12 is set to the seventh flow rate (for example, 0.7 L/min), respectively. Then, the process transitions to the flow of the special activation.

(Step S015) Controller 6 determines whether or not the activation of hydrogen generation apparatus 15 is completed. In a case where the activation is completed (YES in S015), the process transitions to an end step, and in a case where the activation is not completed (NO in S015), the process transitions to step S011.

(Step S016) An operation of stopping hydrogen generation apparatus 15 is performed.

(End) In a case of transitioning from step S015, all of the operation parameters of hydrogen generation apparatus 15 are returned to a typical state, and control is performed in accordance with a command relating to the amount of hydrogen that is generated. In a case of transitioning from step S016, the stopping operation is completed. In addition, in a case of transitioning from step S014, the process transitions to a flow of the special activation.

Through the above-described operations, activation is also performed with the typical activation as much as possible with respect to stopping of power supply from the first power supply which occurs during the typical activation, and thus it is possible to suppress thermal damage of the structure body during the special activation due to heating with a higher combustion amount in comparison to the typical activation. In addition, in a case where activation through the special activation is also difficult, it is possible to stop hydrogen generation apparatus 15, and thus it is possible to suppress leakage and deterioration of the catalyst.

When combining the above-described operations, during the special activation in which power is supplied from only independent activation power supply 5, hydrogen generation apparatus 15 based on the first modification example of the first embodiment can further quicken the temperature rise of hydrogen generation apparatus 15 in comparison to the typical activation in which power is supplied from the first power supply, and it is possible to suppress thermal damage of the structure body and a decrease in the hydrogen concentration in the hydrogen-containing gas due to an increase in the heating amount. According to this, it is possible to quickly activate hydrogen generation apparatus 15, and it is possible to shorten the time taken to supply power from independent activation power supply 5 to the auxiliary machinery, and thus it is possible to miniaturize independent activation power supply 5.

In addition, in a case where power supply from the first power supply is stopped during the typical activation, if the residual amount of power of independent activation power supply 5 is less than the power necessary for the typical activation, the typical activation transitions to the special activation. Accordingly, it is possible to shorten activation time, and it is possible to miniaturize independent activation power supply 5. In addition, in a case where the power of independent activation power supply 5 is greater than the power necessary to complete the typical activation, the typical activation continues to suppress the number of times of the special activation, and thus it is possible to suppress an effect on the structure body and the catalyst to the minimum.

### (Second Modification Example of First Embodiment)

Next, description will be given of a second modification example of the first embodiment of the invention.

Hydrogen generation apparatus 15 according to the second modification example of the first embodiment has the same configuration as that of hydrogen generation apparatus 15 of the first embodiment, and includes reformer 1, raw material supply device 2, combustor 3, combustion air supply device 4, independent activation power supply 5, controller 6, water supply device 7, reformer temperature detector 8, CO reducer 9, CO reducer temperature detector 10, selective oxidizer 11, oxygen-containing gas supply device 12, and selective oxidizer temperature detector 13. In addition, with regard to the parameter changing operation during the typical activation, in a case of transitioning to the special activation in a state in which the amount of power of independent activation power supply 5 is less than power for completion of the typical activation, control is performed to continuously monitor the amount of power and to transition to a stopping operation at the point of time at which activation is determined as difficult with the special activation.

In addition, the above-described configuration is also the same as in the first embodiment, and detailed description thereof will not be repeated.

### [Operation]

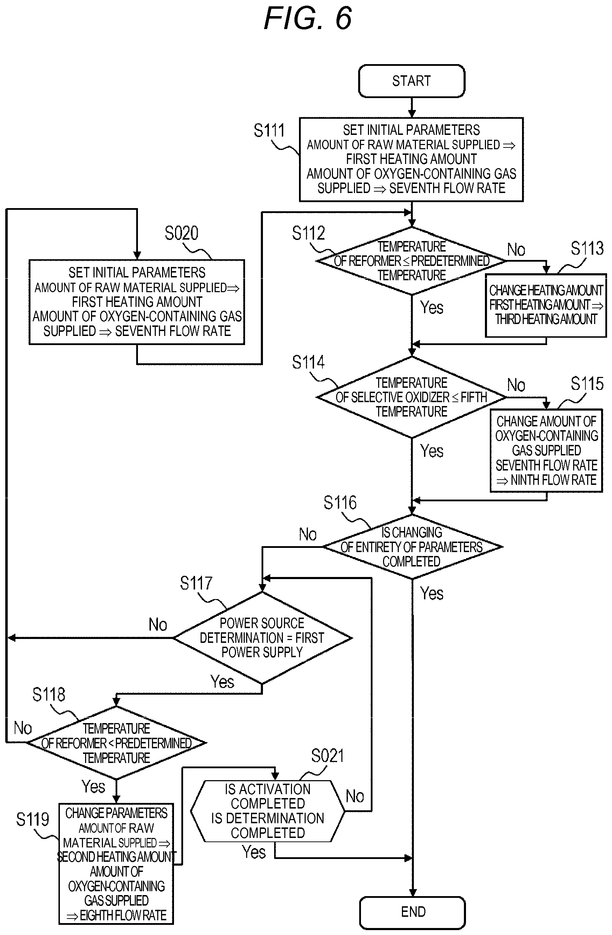

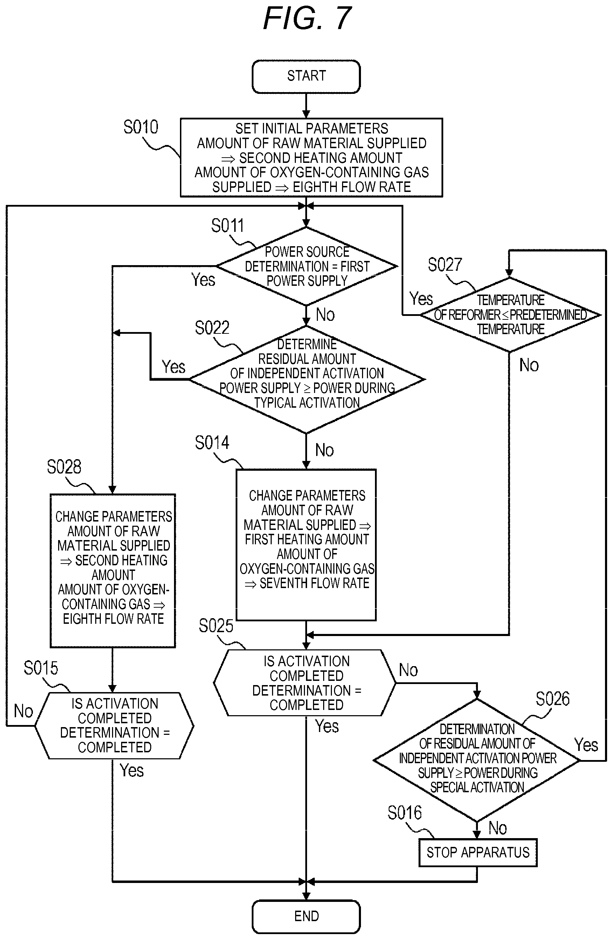

Next, an operation of driving hydrogen generation apparatus 15 according to the second modification example of the first embodiment of the invention will be described in detail with reference to FIGS. 6 and 7.

FIG. 6 is a flowchart illustrating an example of the second modification example of the parameter changing operation during the special activation of hydrogen generation apparatus 15 according to the first embodiment of the invention.

In this flow, step S020 and step S021 are added to the flowchart of the first modification example of the first embodiment which is illustrated in FIG. 4. The other steps are the same as in the first modification example of the first embodiment, and detailed description thereof will not be repeated.

(Step S020) The amount of the raw material gas supplied from raw material supply device 2 is set to the first heating amount (for example, 700 W), and the amount of the oxygen-containing gas supplied from oxygen-containing gas supply device 12 is set to the seventh flow rate (for example, 0.7 L/min), respectively.

(Step S021) Controller 6 determines whether or not the activation of hydrogen generation apparatus 15 is completed. In a case where the activation is completed (YES in S021), the process transitions to an end step, and in a case where the activation is not completed (NO in S021), the process transitions to step S117.

According to this, in a case where power is supplied from the first power supply during the special activation, the special activation transitions to the typical activation, and in a case where power supply from the first power supply is shut off after the transition, the typical activation can transition to the special activation. Accordingly, in a case where power supply from the first power supply is unstable, activation can be performed by an appropriate method, and thus it is possible to minimize the amount of power supplied from the independent activation power supply. Accordingly, it is possible to miniaturize the independent activation power supply.

FIG. 7 is a flowchart illustrating an example of the second modification example of the parameter changing operation during the typical activation of hydrogen generation apparatus 15 according to the first embodiment of the invention.

In this flow, step S012 in the flowchart of the first modification example of the first embodiment which is illustrated in FIG. 5 is substituted with step S022, and step S025, step S026, step S027, and step S028 are added to the flowchart. The other steps are the same as in the first modification example of the first embodiment, and detailed description thereof will not be repeated.

(Step S022) Controller 6 detects the residual amount of power of independent activation power supply 5. In a case where the residual amount of power of independent activation power supply 5 is equal to or greater than the amount of power necessary to complete the typical activation (YES in S022), the process transitions to step S028. In a case where this condition is not satisfied (NO in S022), the process transitions to step S014.

(Step S025) Controller 6 determines whether or not the activation of hydrogen generation apparatus 15 is completed. In a case where the activation is completed (YES in S025), the process transitions to an end step, and in a case where the activation is not completed (NO in S025), the process transitions to step S026.

(Step S026) Controller 6 detects the residual amount of power of independent activation power supply 5. In a case where the residual amount of power of independent activation power supply 5 is equal to or greater than the amount of power necessary to complete the special activation (YES in S026), the process transitions to step S027. In a case where this condition is not satisfied (NO in S026), the process transitions to step S016.

(Step S027) It is determined that the temperature of reformer 1 is lower than a predetermined temperature (for example, 250°C). In a case where the temperature of reformer 1 is lower than the predetermined temperature (YES in S027), the process transitions to step S011. In a case where this condition is not satisfied (NO in S027), the process transitions to step S025.

(Step S028) The amount of the raw material gas supplied from raw material supply device 2 is set to the second heating amount (for example, 500 W), and the amount of the oxygen-containing gas supplied from oxygen-containing gas supply device 12 is set to the eighth flow rate (for example, 0.6 L/min), respectively.

According to this, even in a case where estimation of the residual amount of power of independent activation power supply 5 is incorrect at a point of time at which power supply from the first power supply is stopped, or an unexpected decrease in the residual amount of power occurs, it is possible to stop hydrogen generation apparatus 15 at a point of time at which the special activation does not continue. In addition, even in a case where power supply from the first power supply is shut off during the typical activation, and power supply from the first supply restarts after transitioning to the special activation, it is possible to return to the typical activation. According to this, it is possible to reduce the number of times of the special activation, and it is possible to suppress thermal damage to the structure body due to a rapid temperature rise, and oxidation deterioration of the catalyst due to an increase in the amount of the oxygen-containing gas supplied.

When combining the above-described operations, even in a case of the typical activation operation in which power is supplied from the first power supply, or a case where the special activation operation in which power is supplied from only independent activation power supply 5, hydrogen generation apparatus 15 based on the second modification example of the first embodiment continuously monitors a power supply source, and can transition to the typical activation or the special activation in a case where the power supply source is changed. According to this, even in a situation in which power supply from the first power supply is unstable and thus short-time power breakdown or power supply is repeated, it is possible to quickly activate hydrogen generation apparatus 15 in a case where the special activation is necessary while suppressing the number of times of the special activation to the minimum, and thus it is possible to shorten the time taken to supply power from independent activation power supply 5 to the auxiliary machinery. Accordingly, it is possible to miniaturize independent activation power supply 5.

### (Third Modification Example of First Embodiment)

Next, description will be given of a third modification example of the first embodiment of the invention.

Hydrogen generation apparatus 15 according to the third modification example of the first embodiment is the same as hydrogen generation apparatus 15 of the first embodiment, and includes reformer 1, raw material supply device 2, combustor 3, combustion air supply device 4, independent activation power supply 5, controller 6, water supply device 7, reformer temperature detector 8, CO reducer 9, CO reducer temperature detector 10, selective oxidizer 11, oxygen-containing gas supply device 12, and selective oxidizer temperature detector 13. In addition, in the parameter changing operation, control is performed in accordance with time from combustion initiation instead of the temperature of reformer 1 and selective oxidizer 11.

In addition, the above-described configuration is the same as in the first embodiment, and thus detailed description thereof will not be repeated.

### [Operation]

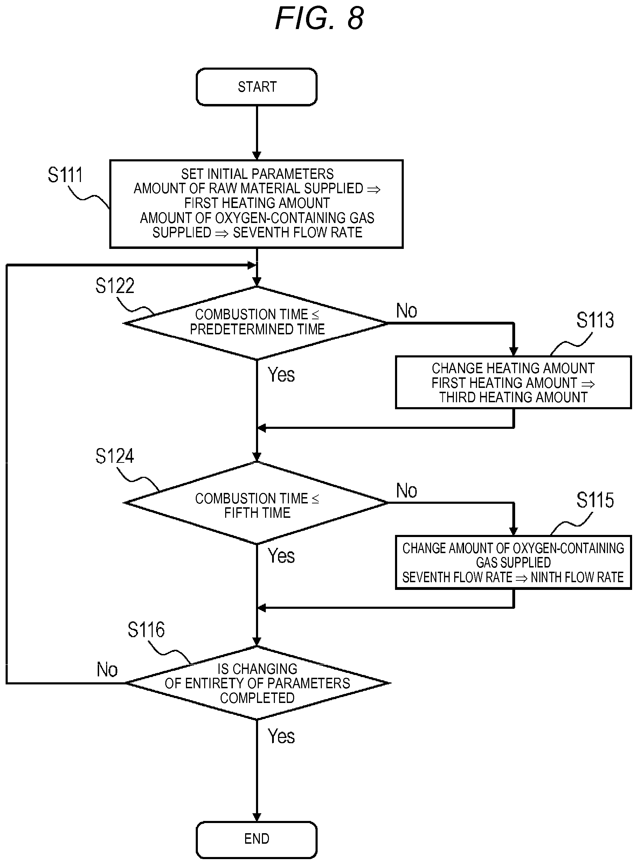

Next, an operation of driving hydrogen generation apparatus 15 according to the third modification example of the first embodiment of the invention will be described in detail with reference to FIG. 8.

FIG. 8 is a flowchart illustrating an example of the third modification example of the parameter changing operation during the special activation of hydrogen generation apparatus 15 according to the first embodiment of the invention.

In this flow, step S112 and step S114 in the flowchart of the first embodiment illustrated in FIG. 3 are substituted with step S122 and step S124, respectively. The other steps are the same as in the first embodiment, and thus detailed description thereof will not be repeated.

(Step S122) In a case where a predetermined time (for example, 30 minutes) or longer has elapsed from combustion initiation of combustor 3 (NO in S122), the process transitions to step S113. In a case where this condition is not satisfied (YES in S122), the process transitions to step S124.

(Step S124) In a case where a fifth time (for example, 35 minutes) or longer has elapsed from the combustion initiation of combustor 3 (NO in S124), the process transitions to step S115. In a case where this condition is not satisfied (YES in S124), the process transitions to step S116.

According to this, even when at least any one of reformer temperature detector 8 and selective oxidizer temperature detector 13 does not function due to a breakdown and the like, it is possible to quicken the temperature rise of hydrogen generation apparatus 15, and it is possible to shorten the time taken to supply power from independent activation power supply 5 to the auxiliary machinery, and thus it is possible to miniaturize independent activation power supply 5.

### (Fourth Modification Example of First Embodiment)

Next, description will be given of a fourth modification example of the first embodiment of the invention.

Hydrogen generation apparatus 15 according to the fourth modification example of the first embodiment is the same as hydrogen generation apparatus 15 of the first embodiment, and includes reformer 1, raw material supply device 2, combustor 3, combustion air supply device 4, independent activation power supply 5, controller 6, water supply device 7, reformer temperature detector 8, CO reducer 9, CO reducer temperature detector 10, selective oxidizer 11, oxygen-containing gas supply device 12, and selective oxidizer temperature detector 13. In addition, in the parameter changing operation during the special activation, control is performed in accordance with time from the combustion initiation instead of the temperature of reformer 1 and selective oxidizer 11, and the special activation transitions to the typical activation in a case where power is supplied from the first power supply.

In addition, the above-described configuration is the same as in the first embodiment, and thus detailed description thereof will not be repeated.

### [Operation]

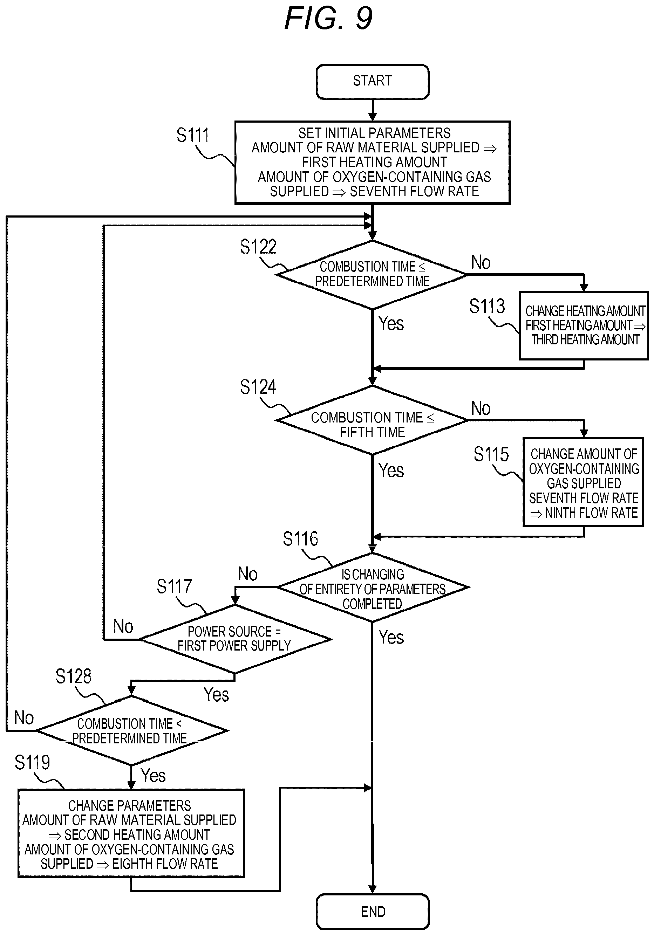

Next, an operation of driving hydrogen generation apparatus 15 according to the fourth modification example of the first embodiment of the invention will be described in detail with reference to FIG. 9.

FIG. 9 is a flowchart illustrating an example of the fourth modification example of the parameter changing operation during the special activation of hydrogen generation apparatus 15 according to the first embodiment of the invention.

In this flow, step S117, step S119, and step S128 are added to the flowchart of the third modification example of the first embodiment which is illustrated in FIG. 8. Step S117 and step S119 are the same as in the first modification example of the first embodiment, and the other steps are the same as in the third modification examples of the first embodiment, and thus detailed description thereof will not be repeated.

(Step S128) In a case where time elapsed from combustion initiation of combustor 3 is shorter than a predetermined time (for example, 30 minutes) (YES in S128), the process transitions to step S119. In a case where this condition is not satisfied (NO in S128), the process transitions to step S122.

According to this, even in a case where reformer temperature detector 8 does not function due to a breakdown and the like, as is the case with the first modification example of the first embodiment, when power is supplied from the first power supply, it is possible to transition to the typical activation, and thus it is possible to suppress thermal damage to the structure body and the catalyst. In addition, it is possible to shorten the time taken to supply power from independent activation power supply 5 to the auxiliary machinery, and thus it is possible to miniaturize independent activation power supply 5.

### (Second Embodiment)

Next, description will be given of a second embodiment of the invention.

Hydrogen generation apparatus 15 according to the second embodiment of the invention has the same configuration as that of hydrogen generation apparatus 15 of the first embodiment illustrated in FIG. 1, and includes reformer 1, raw material supply device 2, combustor 3, combustion air supply device 4, independent activation power supply 5, controller 6, water supply device 7, reformer temperature detector 8, CO reducer 9, CO reducer temperature detector 10, selective oxidizer 11, oxygen-containing gas supply device 12, and selective oxidizer temperature detector 13.

The above-described configuration is the same as in the first embodiment, and thus detailed description will not be repeated.

### [Operation]

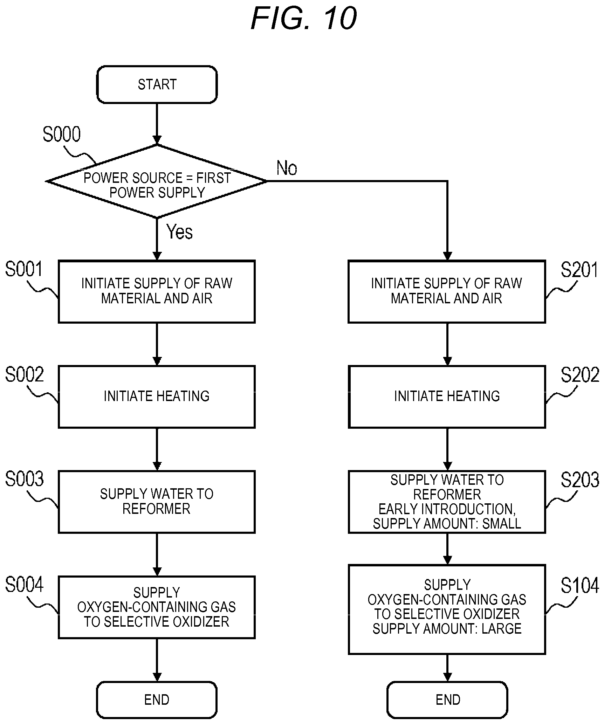

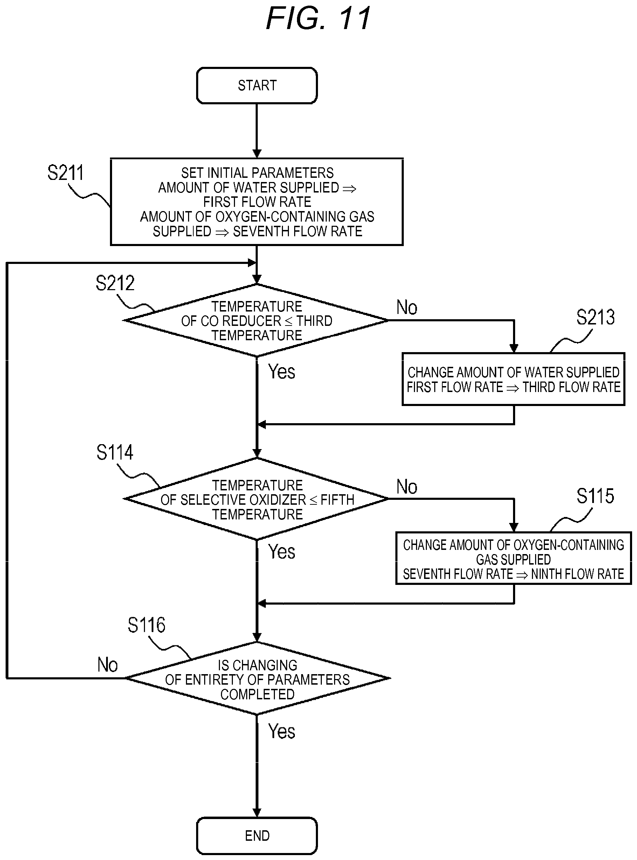

Next, an operation of driving the hydrogen generation apparatus according to the second embodiment of the invention will be described in detail with reference to FIGS. 10 and 11.

FIG. 10 is a flowchart illustrating an example of an operation of hydrogen generation apparatus 15 according to the second embodiment of the invention.

In addition, in this embodiment, steps S101, S102, and S103 in the flowchart of the first embodiment illustrated in FIG. 2 are substituted with steps S201, S202, and S203, respectively. The other steps are the same as in the first embodiment illustrated in FIG. 2, and thus detailed description thereof will not be repeated.

(Step S201) Power is supplied from independent activation power supply 5 to raw material supply device 2 and combustion air supply device 4 in accordance with a command of controller 6 that detects power supply from independent activation power supply 5. First, after combustion air is supplied to combustor 3 in an amount corresponding to the amount of raw material gas, the raw material gas is supplied in the second heating amount (for example, 500 W).

(Step S202) In combustor 3, the raw material gas, which is ignited by an ignition device, is combusted in combination with the combustion air. Heat, which is generated due to the combustion in combustor 3, is supplied to reformer 1, CO reducer 9, and selective oxidizer 11 to raise the temperature of reformer 1, CO reducer 9, and selective oxidizer 11. In addition, heating with a heater may be simultaneously used in combination.

(Step S203) In a case where reformer temperature detector 8 detects that reformer 1 becomes a temperature of a first temperature (for example, 180°C) lower than the second temperature (for example, 200°C), or in a case where a first time (for example, 10 minutes) shorter than the second time (for example, 15 minutes) has elapsed from combustion initiation of combustor 3, water is supplied from water supply device 7 at a first flow rate (for example, 3 cc/min) that is less than a second flow rate (for example, 5 cc/min).

In addition, in a case where at least any one of CO reducer temperature detector 10 and selective oxidizer temperature detector 13 exists, a threshold value may be set in advance with respect to a temperature measured by any one of CO reducer temperature detector 10 and selective oxidizer temperature detector 13 to initiate water supply. For example, the threshold value in this case may be set to 120°C in CO reducer temperature detector 10, and 110°C in selective oxidizer temperature detector 13.

According to this, it is possible to initiate water supply at an early time in comparison to step S003. The water that is supplied and the raw material gas cause a water vapor reforming reaction in reformer 1, and the raw material gas becomes a reformed gas, and a volume thereof increases. The reformed gas flows through CO reducer 9 and selective oxidizer 11 on a downstream side.

The temperature of the water vapor reforming reaction in reformer 1 is higher than a temperature of a reaction in CO reducer 9 and selective oxidizer 11, and thus heat transfer occurs from the reformed gas to CO reducer 9 and selective oxidizer 11. With regard to an amount of heat of transfer, as the amount of flowing gas increases, a flow rate increases, and thus the heat transfer is promoted. Accordingly, heat transfer from reformer 1 to CO reducer 9 and selective oxidizer 11, which exist downstream of reformer 1, is promoted, and thus it is possible to quicken the temperature rise thereof.

In addition, the flow rate of water is further reduced in comparison to step S003, and thus the amount of water vapor included in the reformed gas obtained by the water vapor reforming reaction decreases, and the dew point of the reformed gas is lowered. According to this, it is possible to suppress condensation to the catalyst inside CO reducer 9 and selective oxidizer 11 on a downstream side, and thus it is possible to suppress a decrease in durability of the catalyst.

In addition, when a reforming catalyst inside reformer 1 becomes an appropriate temperature (250°C or higher, and preferably 350°C or higher), the water vapor reforming reaction is likely to be promoted. Accordingly, in step S203, it is possible to obtain a further higher effect in combination with an increase in the heating amount to the hydrogen generation apparatus in combustor 3 which is illustrated in step S101 and step S102.

Through the above-described operations, during the special activation in which power is supplied from only independent activation power supply 5, it is possible to further quicken the temperature rise of hydrogen generation apparatus 15 in comparison to the typical activation in which power is supplied from the first power supply. According to this, it is possible to quickly activate activation of hydrogen generation apparatus 15, and it is possible to shorten the time taken to supply power from independent activation power supply 5 to the auxiliary machinery, and thus it is possible to miniaturize independent activation power supply 5.

FIG. 11 is a flowchart illustrating an example of the parameter changing operation during the special activation of hydrogen generation apparatus 15 according to the second embodiment of the invention.

In this flow, in a case of transitioning to the special activation subsequent to step S201 in FIG. 10, the amount of water and the amount of the oxygen-containing gas supplied are determined in accordance with the temperature of CO reducer 9 and selective oxidizer 11.

In this flow, step S111, step S112, and step S113 in the flowchart of the first embodiment illustrated in FIG. 3 are substituted with step S211, step S212, and step S213, respectively. The other steps are the same as in the first embodiment, and thus detailed description thereof will not be repeated.

(Step S211) As initial values, the amount of water supplied from water supply device 7 is set to the first flow rate (for example, 3 cc/min), and the amount of the oxygen-containing gas supplied from oxygen-containing gas supply device 12 is set to the seventh flow rate (for example, 0.7 L/min), respectively.

(Step S212) In a case where the temperature of CO reducer 9 becomes a third temperature (for example, 100°C) (NO in S212), the process transitions to step S213. In a case where this condition is not satisfied (YES in S212), the process transitions to step S114. Here, the third temperature is a temperature at which a catalyst inside CO reducer 9 and on a downstream side is not leaked due to water vapor that is supplied, and is determined in accordance with the amount of water supplied to reformer 1. The third temperature is preferably 100°C or higher.

(Step S213) Controller 6 controls the amount of water supplied from water supply device 7 to a third flow rate (for example, 7 cc/min) that is greater than the first flow rate (for example, 3 cc/min). In addition, the third flow rate may be the same as the second flow rate (for example, 5 cc/min).

According to this, the water vapor reforming reaction is performed with the amount of water that is less than the amount of water during the typical activation, and thus it is possible to suppress a decrease in the amount of hydrogen generated, and it is possible to suppress precipitation of carbon to a catalyst surface which occurs with a less amount of water. In addition, the amount of water increases. Accordingly, the water that is supplied and the raw material gas cause a water vapor reforming reaction in reformer 1, and the raw material gas becomes a reformed gas, and a volume thereof increases. The reformed gas flows through CO reducer 9 and selective oxidizer 11 on a downstream side.

The temperature of the water vapor reforming reaction in reformer 1 is higher than a temperature of a reaction in CO reducer 9 and selective oxidizer 11, and thus heat transfer occurs from the reformed gas to CO reducer 9 and selective oxidizer 11. With regard to an amount of heat of transfer, as the amount of flowing gas increases, a flow rate increases, and thus the heat transfer is promoted. Accordingly, heat transfer from reformer 1 to CO reducer 9 and selective oxidizer 11, which exist downstream of reformer 1, is promoted, and thus it is possible to quicken the temperature rise thereof.

Through the above-described operations, it is possible to suppress deterioration of the catalyst due to carbon precipitation, and a decrease in the amount of hydrogen in the hydrogen-containing gas during the special activation.

When combining the above-described operations, during the special activation in which power is supplied from only independent activation power supply 5, hydrogen generation apparatus 15 based on the second embodiment can further quicken the temperature rise of hydrogen generation apparatus 15 in comparison to the typical activation in which power is supplied from the first power supply, and it is possible to suppress deterioration of a catalyst due to carbon precipitation and a decrease in the amount of hydrogen in the hydrogen-containing gas.

According to this, it is possible to quickly activate hydrogen generation apparatus 15, and it is possible to shorten the time taken to supply power from independent activation power supply 5 to the auxiliary machinery, and thus it is possible to miniaturize independent activation power supply 5.

### (First Modification Example of Second Embodiment)

Next, description will be given of a first modification example of the second embodiment of the invention.

Hydrogen generation apparatus 15 according to the first modification example of the second embodiment of the invention has the same configuration as that of hydrogen generation apparatus 15 of the first embodiment, and includes reformer 1, raw material supply device 2, combustor 3, combustion air supply device 4, independent activation power supply 5, controller 6, water supply device 7, reformer temperature detector 8, CO reducer 9, CO reducer temperature detector 10, selective oxidizer 11, oxygen-containing gas supply device 12, and selective oxidizer temperature detector 13. In addition, in the parameter changing operation, control is performed in accordance with time from combustion initiation instead of the temperature of reformer 1 and selective oxidizer 11.

In addition, the above-described configuration is the same as in the first embodiment, and thus detailed description thereof will not be repeated.

### [Operation]

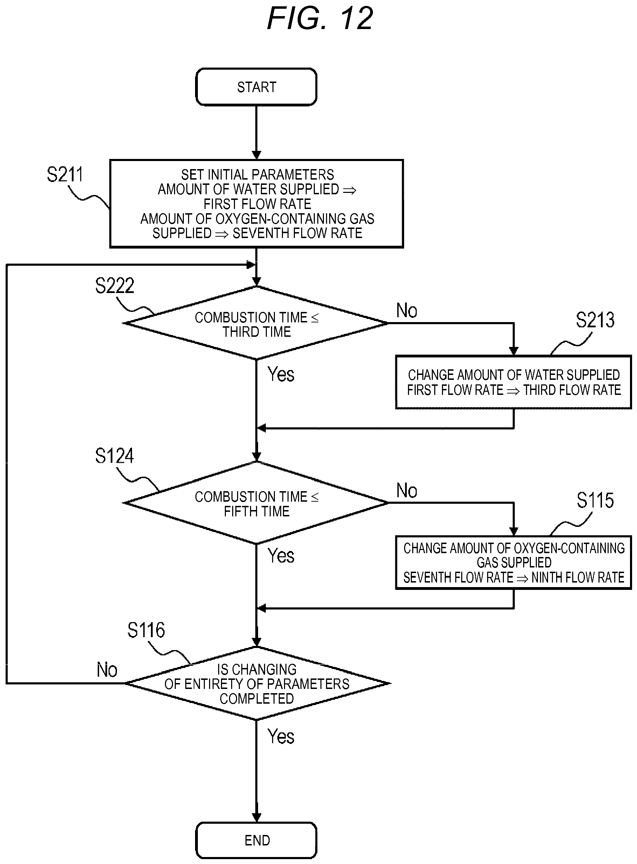

Next, an operation of driving hydrogen generation apparatus 15 according to the first modification example of the second embodiment of the invention will be described in detail with reference to FIG. 12.

FIG. 12 is a flowchart illustrating an example of a first modification example of the parameter changing operation during the special activation of hydrogen generation apparatus 15 according to the second embodiment of the invention.

In this flow, step S212 and step S114 of the second embodiment illustrated in FIG. 11 are substituted with step S222 and step S124, respectively. The other steps are the same as in the second embodiment, and thus detailed description thereof will not be repeated.

(Step S222) In a case where predetermined time (for example, 30 minutes) or longer has elapsed from combustion initiation of combustor 3 (NO in S222), the process transitions to step S213. In a case where this condition is not satisfied (YES in S222), the process transitions to step S124.

(Step S124) In a case where the fifth time (for example, 35 minutes) or longer has elapsed from combustion initiation of combustor 3 (NO in S224), the process transitions to step S115. In a case where this condition is not satisfied (YES in S224), the process transitions to step S116.

According to this, even when at least any one of reformer temperature detector 8 and selective oxidizer temperature detector 13 does not function due to a breakdown and the like, it is possible to quicken the temperature rise of hydrogen generation apparatus 15, and it is possible to shorten the time taken to supply power from independent activation power supply 5 to the auxiliary machinery, and thus it is possible to miniaturize independent activation power supply 5.

### (Third Embodiment)

Next, description will be given of a third embodiment of the invention.

Hydrogen generation apparatus 15 according to the third embodiment of the invention is the same as hydrogen generation apparatus 15 of the first embodiment illustrated in FIG. 1, and includes reformer 1, raw material supply device 2, combustor 3, combustion air supply device 4, independent activation power supply 5, controller 6, water supply device 7, reformer temperature detector 8, CO reducer 9, CO reducer temperature detector 10, selective oxidizer 11, oxygen-containing gas supply device 12, and selective oxidizer temperature detector 13.

The above-described configuration is the same as in the first embodiment, and thus detailed description thereof will not be repeated.

### [Operation]

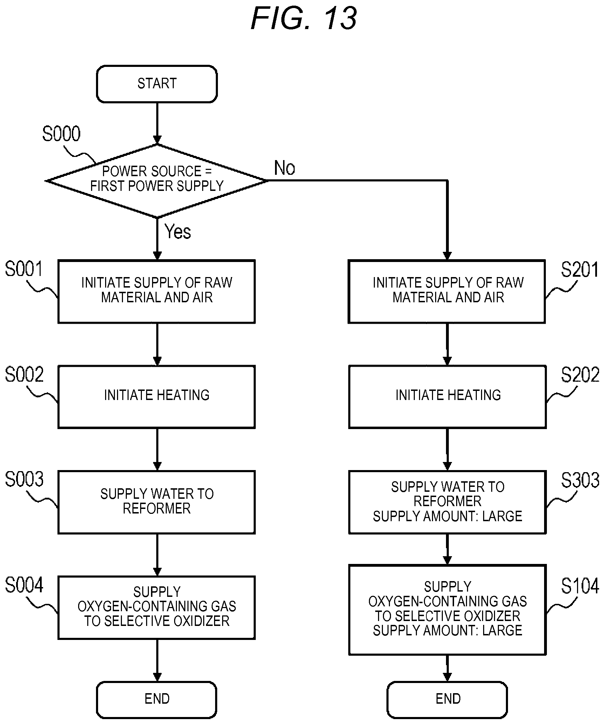

Next, an operation of driving hydrogen generation apparatus 15 of the third embodiment of the invention will be described in detail with reference to FIG. 13.

FIG. 13 is a flowchart illustrating an example of an operation of hydrogen generation apparatus 15 according to the third embodiment of the invention.

In addition, in this embodiment, step S203 in the flowchart of the second embodiment illustrated in FIG. 10 is substituted with step S303. The other steps are the same as in the second embodiment, and thus detailed description thereof will not be repeated.

(Step S303) During the special activation in which power is supplied from only independent activation power supply 5, water is supplied at a fourth flow rate (for example, 8 cc/min) that is greater than the second flow rate (for example, 5 cc/min), and then the reforming reaction is progressed.

According to this, the amount of water that is supplied further increases in comparison to step S003 during the typical activation. The water that is supplied and the raw material gas cause the water vapor reforming reaction in reformer 1, and the raw material gas becomes a reformed gas, and a volume thereof increases. The reformed gas flows through CO reducer 9 and selective oxidizer 11 on a downstream side.

The temperature of the water vapor reforming reaction in reformer 1 is higher than a temperature of a reaction in CO reducer 9 and selective oxidizer 11, and thus heat transfer occurs from the reformed gas to CO reducer 9 and selective oxidizer 11. With regard to an amount of heat of transfer, as the amount of flowing gas increases, a flow rate increases, and thus the heat transfer is promoted. When the amount of water increases, the water vapor reforming reaction is promoted, and thus the amount of reformed gas increases, and the flow rate increases. Accordingly, the heat transfer is promoted.

Accordingly, heat transfer from reformer 1 to CO reducer 9 and selective oxidizer 11, which exist downstream of reformer 1, is promoted, and thus it is possible to quicken the temperature rise thereof. Accordingly, in step S303 that is the special activation, the heat transfer from reformer 1 to CO reducer 9 and selective oxidizer 11 which exist downstream of reformer 1 is further promoted in comparison to step S003, and thus it is possible to quicken the temperature rise thereof.

In addition, when a reforming catalyst inside reformer 1 becomes an appropriate temperature (250°C or higher, and preferably 350°C or higher), the water vapor reforming reaction is likely to be promoted. Accordingly, in step S303, it is possible to obtain a more preferable effect in combination with an increase in the heating amount to the hydrogen generation apparatus in combustor 3 which is illustrated in step S101 and step S102 of the first embodiment.

In addition, the amount of water may be controlled in the same manner as in step S203 of the second embodiment until the temperature of reformer 1 sufficiently rises. In a case where the temperature of reformer 1 is low, water is not sufficiently consumed in the water vapor reforming reaction, and thus the dew point of the reforming gas is raised.

In this case, when the amount of water is limited in the same manner as in step S203, the amount of water vapor included in the reformed gas obtained by the water vapor reforming reaction decreases, and the dew point of the reformed gas is lowered. According to this, even in the temperature of reformer 1, CO reducer 9, and selective oxidizer 11 is low, it is possible to suppress condensation, and thus it is possible to obtain a more preferable effect.

Through the above-described operation, it is possible to further quicken the temperature rise of hydrogen generation apparatus 15 during the special activation in which power is supplied from only independent activation power supply 5 in comparison to the typical activation in which power is supplied from the first power supply. According to this, it is possible to quickly activate hydrogen generation apparatus 15, and it is possible to shorten the time taken to supply power from independent activation power supply 5 to auxiliary machinery. Accordingly, it is possible to miniaturize independent activation power supply 5.

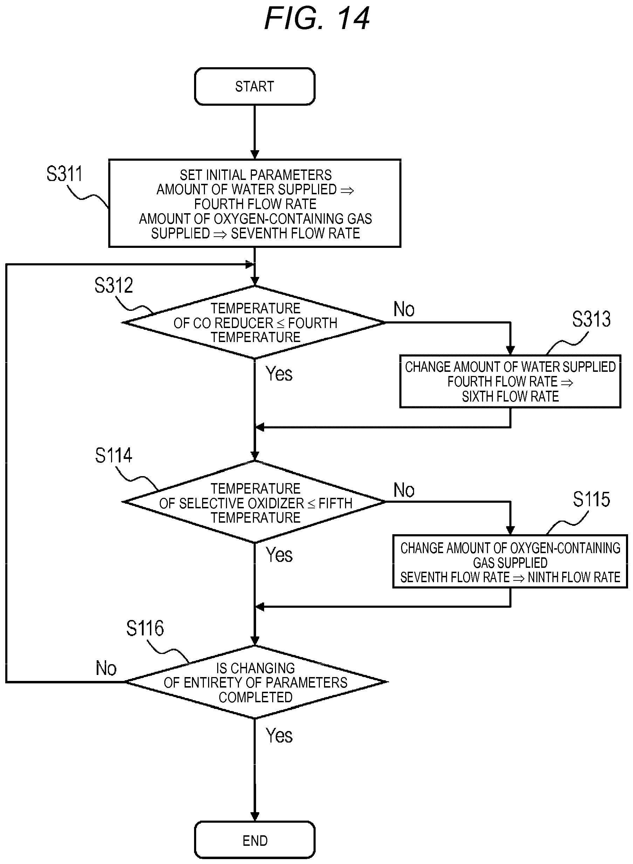

FIG. 14 is a flowchart illustrating an example of the parameter changing operation during the special activation of hydrogen generation apparatus 15 according to the third embodiment of the invention.

In this flow, in a case of transitioning to the special activation subsequent to step S201 in FIG. 13, the amount of water and the amount of oxygen-containing gas supplied are determined in accordance with the temperature of CO reducer 9 and selective oxidizer 11.

In this flow, step S211, step S212, and step S213 in the flowchart of the second embodiment illustrated in FIG. 11 are substituted with step S311, step S312, and step S313, respectively. The other steps are the same as in the second embodiment, and thus detailed description thereof will not be repeated.

(Step S311) As initial values, the amount of water supplied from water supply device 7 is set to the fourth flow rate (for example, 8 cc/min), and the amount of oxygen-containing gas supplied from oxygen-containing gas supply device 12 is set to the seventh flow rate (for example, 0.7 L/min), respectively.

(Step S312) In a case where the temperature of CO reducer 9 becomes equal to or higher than a fourth temperature (for example, 130°C) (NO in S312), the process transitions to step S313. In a case where this condition is not satisfied (YES in S312), the process transitions to step S114.

(Step S313) Controller 6 controls the amount of water supplied from water supply device 7 to a sixth flow rate (for example, 6 cc/min) that is less than the fourth flow rate (for example, 8 cc/min). In addition, the sixth flow rate may be the same as the second flow rate (for example, 5 cc/min).

According to this, after the temperature of CO reducer 9 on a downstream side sufficiently rises, it is possible to reduce the amount of water supplied. Accordingly, it is possible to suppress the amount of heat that is used for generation of excessive water vapor, and thus it is possible to further raise heat efficiency of hydrogen generation apparatus 15 in comparison to a case where the amount of water is not decreased.

Through the above-described operations, in the special activation, it is possible to suppress a decrease in the heat efficiency during hydrogen generation, and thus hydrogen generation apparatus 15 based on the third embodiment can further quicken the temperature rise of hydrogen generation apparatus 15 during the special activation in which power is supplied from only independent activation power supply 5 in comparison to the typical activation in which power is supplied from the first power, and it is possible to suppress a decrease in the heat efficiency.

According to this, it is possible to quicken activation of hydrogen generation apparatus 15, and thus it is possible to shorten the time taken to supply power from independent activation power supply 5 to the auxiliary machinery. Accordingly, it is possible to miniaturize independent activation power supply 5.

### (First Modification Example of Third Embodiment)

Hydrogen generation apparatus 15 according to a first modification example of the third embodiment is the same as hydrogen generation apparatus 15 of the first embodiment, and includes reformer 1, raw material supply device 2, combustor 3, combustion air supply device 4, independent activation power supply 5, controller 6, water supply device 7, reformer temperature detector 8, CO reducer 9, CO reducer temperature detector 10, selective oxidizer 11, oxygen-containing gas supply device 12, and selective oxidizer temperature detector 13.

In addition, the above-described configuration is the same as in the first embodiment, and thus detailed description thereof will not be repeated.

### [Operation]

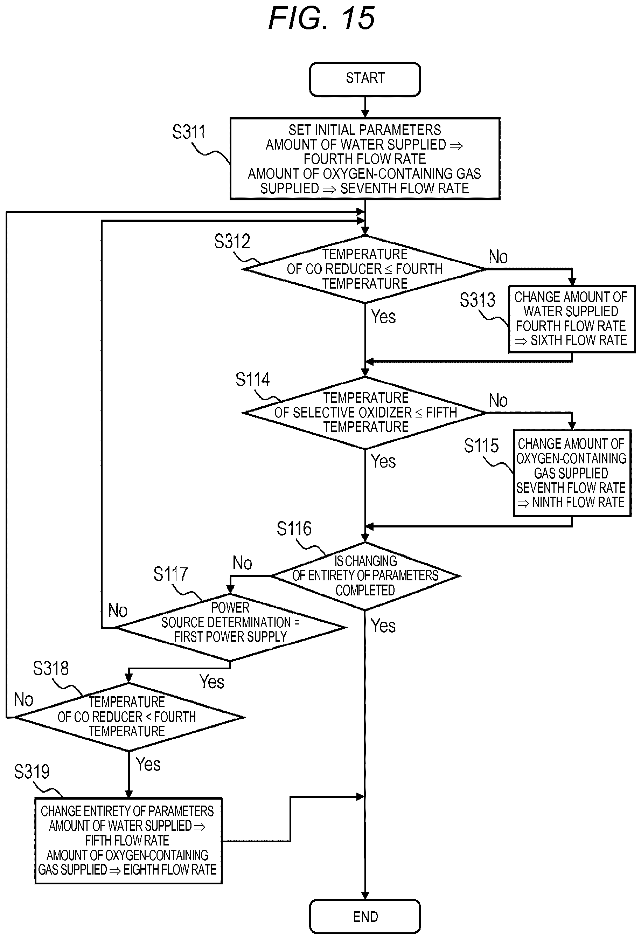

Next, an operation of driving hydrogen generation apparatus 15 according to the first modification example of the third embodiment of the invention will be described in detail with reference to FIG. 15.

FIG. 15 is a flowchart illustrating an example of a first modification example of the parameter changing operation during the special activation of hydrogen generation apparatus 15 according to the third embodiment of the invention.

In this flow, step S117, step S318, and step S319 are added to the flowchart of the third embodiment illustrated in FIG. 14. Step S117 is the same as in the first modification example of the first embodiment, and the other steps are the same as in the third embodiment, and thus description thereof will not be repeated.

(Step S318) In a case where the temperature of CO reducer 9 is lower than the fourth temperature (for example, 130°C) (YES in S318), the process transitions to step S319. In a case where this condition is not satisfied (NO in S318), the process transitions to step S312.

(Step S319) The amount of water supplied from water supply device 7 is set to a fifth flow rate (for example, 5 cc/min), and the amount of oxygen-containing gas supplied from oxygen-containing gas supply device 12 is set to the eighth flow rate (for example, 0.6 L/min), respectively.

According to this, after the temperature of CO reducer 9 on a downstream side sufficiently rises, it is possible to reduce the amount of water supplied. Accordingly, it is possible to suppress the amount of heat that is used for generation of excessive water vapor, and thus it is possible to further raise heat efficiency of hydrogen generation apparatus 15 in comparison to a case where the amount of water is not decreased. In addition, in a case where power supply from the first power supply is recovered, the amount of water supplied is lowered at an early time in comparison to the special activation. Accordingly, it is possible to raise the heat efficiency of hydrogen generation apparatus 15 at an early time in comparison to a case where the special activation continues, and it is possible to reduce a leakage risk of the catalyst due to an increase of the amount of water supplied.

### (Second Modification Example of Third Embodiment)

Next, description will be given of a second modification example of the third embodiment of the invention.

Hydrogen generation apparatus 15 according to the second modification example of the third embodiment of the invention is the same as hydrogen generation apparatus 15 of the first embodiment, and includes reformer 1, raw material supply device 2, combustor 3, combustion air supply device 4, independent activation power supply 5, controller 6, water supply device 7, reformer temperature detector 8, CO reducer 9, CO reducer temperature detector 10, selective oxidizer 11, oxygen-containing gas supply device 12, and selective oxidizer temperature detector 13. In addition, in the parameter changing operation during the special activation, control is performed in accordance with time from the combustion initiation instead of the temperature of reformer 1 and selective oxidizer 11.

In addition, the above-described configuration is the same as in the first embodiment, and thus detailed description thereof will not be repeated.

### [Operation]

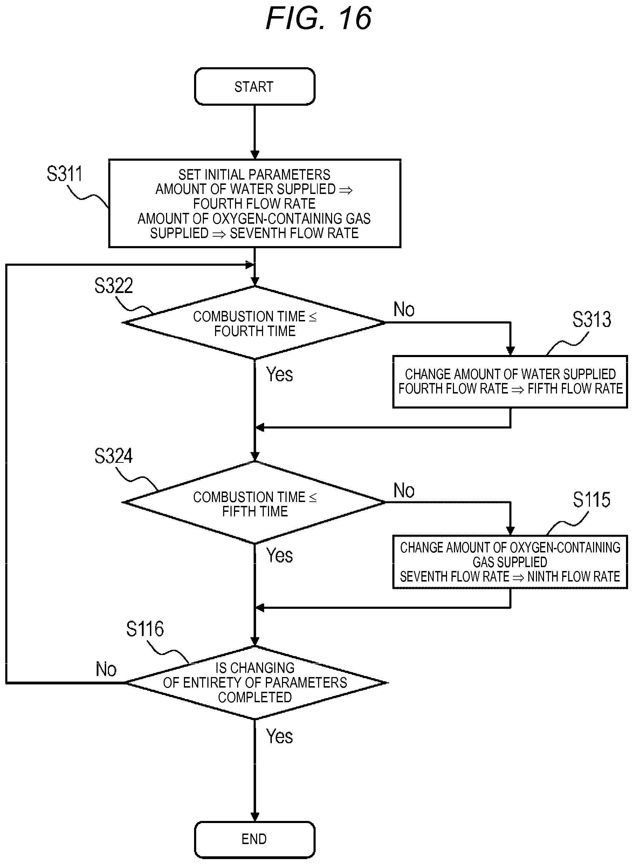

Next, an operation of driving hydrogen generation apparatus 15 according to the second modification example of the third embodiment of the invention will be described in detail with reference to FIG. 16.

FIG. 16 is a flowchart illustrating an example of a second modification example of the parameter changing operation during the special activation of hydrogen generation apparatus 15 according to the third embodiment of the invention.

In this flow, step S312 and step S114 in the flowchart of the third embodiment illustrated in FIG. 14 are substituted with step S322 and step S324, respectively. The other steps are the same as in the third embodiment, and thus detailed description thereof will not be repeated.

(Step S322) In a case where a fourth time (for example, 30 minutes) or longer has elapsed from combustion initiation of combustor 3 (NO in S322), the process transitions to step S313. In a case where this condition is not satisfied (YES in S322), the process transitions to step S324.

(Step S324) In a case where the fifth time (for example, 35 minutes) or longer has elapsed from combustion initiation of combustor 3 (NO in S324), the process transitions to step S115. In a case where this condition is not satisfied (YES in S324), the process transitions to step S116.

According to this, even when at least any one of CO reducer temperature detector 10 and selective oxidizer temperature detector 13 does not function due to a breakdown and the like, it is possible to quicken the temperature rise of hydrogen generation apparatus 15, and it is possible to shorten the time taken to supply power from independent activation power supply 5 to the auxiliary machinery, and thus it is possible to miniaturize independent activation power supply 5.

### (Third Modification Example of Third Embodiment)

Next, description will be given of a third modification example of the third embodiment of the invention.

Hydrogen generation apparatus 15 according to the third modification example of the third embodiment is the same as hydrogen generation apparatus 15 of the first embodiment, and includes reformer 1, raw material supply device 2, combustor 3, combustion air supply device 4, independent activation power supply 5, controller 6, water supply device 7, reformer temperature detector 8, CO reducer 9, CO reducer temperature detector 10, selective oxidizer 11, oxygen-containing gas supply device 12, and selective oxidizer temperature detector 13. In addition, in the parameter changing operation during the special activation, control is performed in accordance with time from the combustion initiation instead of the temperature of reformer 1 and selective oxidizer 11, and the special activation transitions to the typical activation in a case where power is supplied from the first power supply.

In addition, the above-described configuration is the same as in the first embodiment, and thus detailed description thereof will not be repeated.

### [Operation]

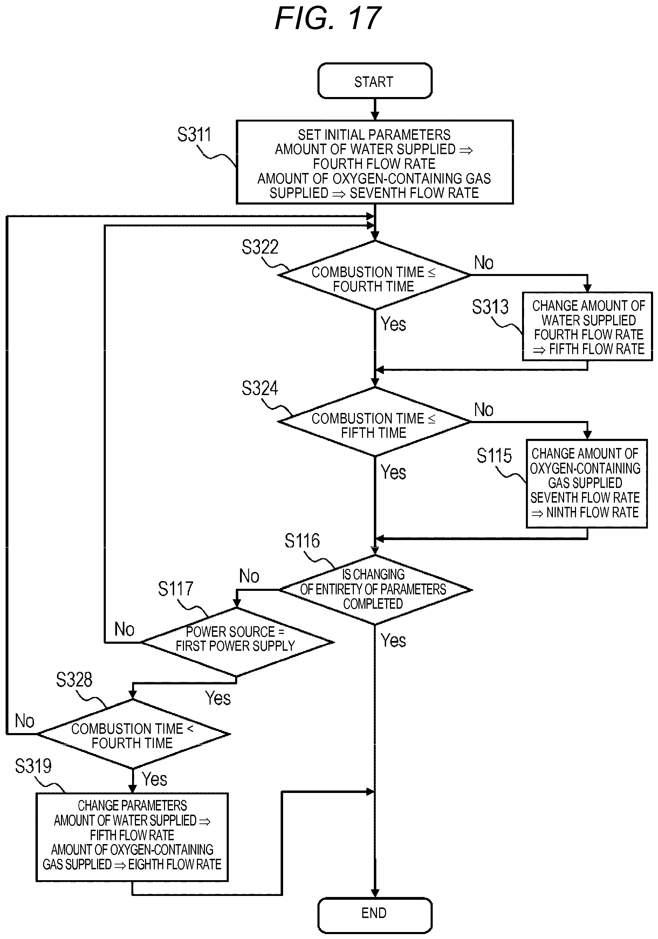

Next, an operation of driving hydrogen generation apparatus 15 according to the third modification example of the third embodiment of the invention will be described in detail with reference to FIG. 17.

FIG. 17 is a flowchart illustrating an example of a third modification example of the parameter changing operation during the special activation of hydrogen generation apparatus 15 according to the third embodiment of the invention.

In this flow, step S117, step S328, and step S319 are added to the flowchart of the second modification example of the third embodiment illustrated in FIG. 16. Step S117 is the same as in the first modification example of the first embodiment, step S319 is the same as in the first modification example of the third embodiment, and the other steps are the same as in the third embodiment, and thus detailed description thereof will not be repeated.

(Step S328) In a case where time elapsed from combustion initiation of combustor 3 is shorter than the fourth time (for example, 30 minutes) (YES in S328), the process transitions to step S319. In a case where this condition is not satisfied (NO in S328), the process transitions to step S322.

According to this, even when at least any one of CO reducer temperature detector 10 and selective oxidizer temperature detector 13 does not function due to a breakdown and the like, it is possible to quicken the temperature rise of hydrogen generation apparatus 15, and it is possible to shorten the time taken to supply power from independent activation power supply 5 to the auxiliary machinery, and thus it is possible to miniaturize independent activation power supply 5. In addition, in a case where power supply from the first power supply is recovered, the amount of water supplied is lowered at an early time in comparison to the special activation. Accordingly, it is possible to raise the heat efficiency of hydrogen generation apparatus 15 at an early time in comparison to a case where the special activation continues, and it is possible to reduce a leakage risk of the catalyst due to an increase of the amount of water supplied.

In addition, hydrogen generation apparatuses 15 described in the first to third embodiments may be combined in an arbitrary manner, and an additionally higher effect may be exhibited in accordance with the combination.

### (Fourth Embodiment)

Next, description will be given of a fourth embodiment of the invention.

A fuel cell system according to the fourth embodiment of the invention further includes fuel cell 16 in addition to any of hydrogen generation apparatuses 15 in the first embodiment, the second embodiment, and the third embodiment.

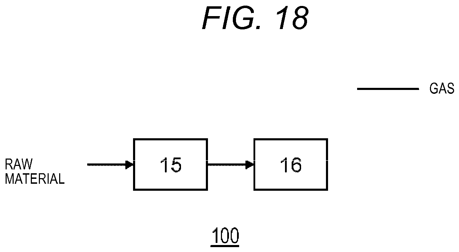

FIG. 18 is a block diagram illustrating an example of a schematic configuration of fuel cell system 100 according to the fourth embodiment of the invention.

Fuel cell 16 performs power generation by using the hydrogen-containing gas that is supplied by hydrogen generation apparatus 15. Fuel cell 16 may be any kind of fuel cell, and for example, a polymer electrolyte type fuel cell (PEFC), a solid oxide type fuel cell, a phosphoric acid type fuel cell, and the like can be used.

In addition, as hydrogen generation apparatus 15, any of hydrogen generation apparatuses 15 in the first embodiment, the second embodiment, and the third embodiment may be used. The above description is true of hydrogen generation apparatus 15, and thus detailed description thereof will not be repeated.

### [Operation]

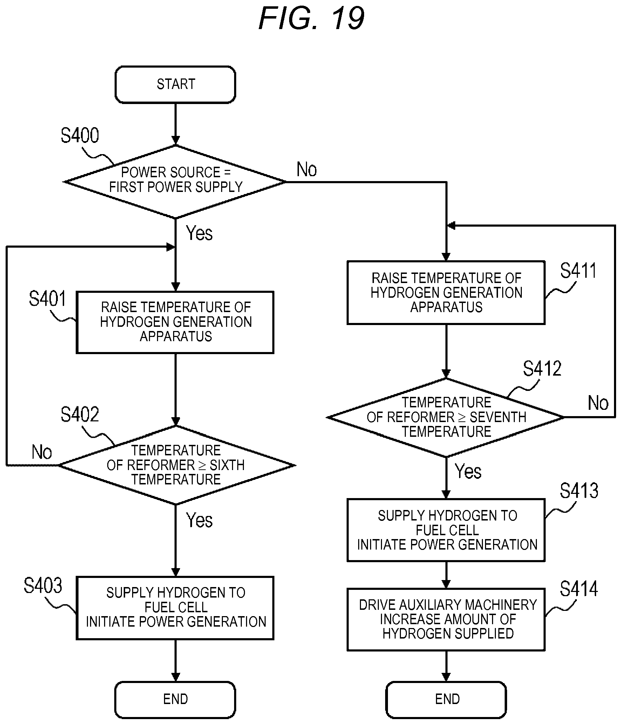

FIG. 19 is a flowchart illustrating an example of an operation of fuel cell system 100 according to the fourth embodiment of the invention.

(Start) An activation signal is input.

(Step S400) Controller 6 that receives an activation command detects whether power is being supplied from the first power supply or power is being supplied from only independent activation power supply 5. In a case where power is being supplied from the first power supply (YES in S400), a process transitions to step S401 of the typical activation operation, and in a case where power is being supplied from only independent activation power supply 5 (NO in S400), the process transitions to step S411 of the special activation operation.

(Step S401) The typical activation operation of hydrogen generation apparatus 15 is initiated, and a temperature rise is performed.

(Step S402) It is determined whether or not the temperature of reformer 1 of hydrogen generation apparatus 15 is equal to or higher than a sixth temperature (for example, 550°C). When the temperature of reformer 1 is equal to or higher than the sixth temperature (for example, 550°C) (YES in S402), the process proceeds to step S403, and when the temperature of reformer 1 is lower than the sixth temperature (for example, 550°C) (NO in S402), the process transitions to step S401.

(Step S403) Hydrogen is supplied to fuel cell 16 to initiate power generation.

(Step S411) The special activation operation of hydrogen generation apparatus 15 is initiated, and a temperature rise is performed.

(Step S412) It is determined whether or not the temperature of reformer 1 is equal to or higher than a seventh temperature (for example, 500°C) that is lower than the sixth temperature (for example, 550°C). When the temperature of reformer 1 is equal to or higher than the seventh temperature (for example, 500°C) (YES in S412), the process transitions to step S413, and when the temperature of reformer 1 is lower than the seventh temperature (for example, 500°C) (NO in S412), the process transitions to step S411.

(Step S413) Hydrogen is supplied to fuel cell 16 to initiate power generation.

(Step S414) The temperature rise of hydrogen generation apparatus 15 continues, the amount of hydrogen generated is increased, and the amount of power generation is increased so that the auxiliary machinery is driven with power that is generated, and hydrogen can be supplied in an amount, which corresponds to a minimum amount of power generation set in advance, or greater.

According to this, it is possible to transition to power generation at an early time in comparison to the typical activation illustrated in step S401 and step S402. According to this, time taken to supply power for driving the auxiliary machinery from independent activation power supply 5 becomes shorter, and thus it is possible to decrease the amount of power supplied from independent activation power supply 5. Accordingly, it is possible to miniaturize independent activation power supply 5.

(End) Power is supplied to an outer side of the system.

According to this, it is possible to supply power for driving of the auxiliary machinery from the fuel cell at an early time in comparison to the typical activation. Accordingly, a load of independent activation power supply 5 decreases, and thus miniaturization is possible.

### (First Modification Example of Fourth Embodiment)

Next, description will be given of a first modification example of the fourth embodiment of the invention.

Fuel cell system 100 according to the first modification example of the fourth embodiment of the invention has the same configuration as in the fourth embodiment, and includes hydrogen generation apparatus 15 and fuel cell 16. In addition, the above-described configuration is the same as in the fourth embodiment, and thus detailed description thereof will not be repeated.

### [Operation]

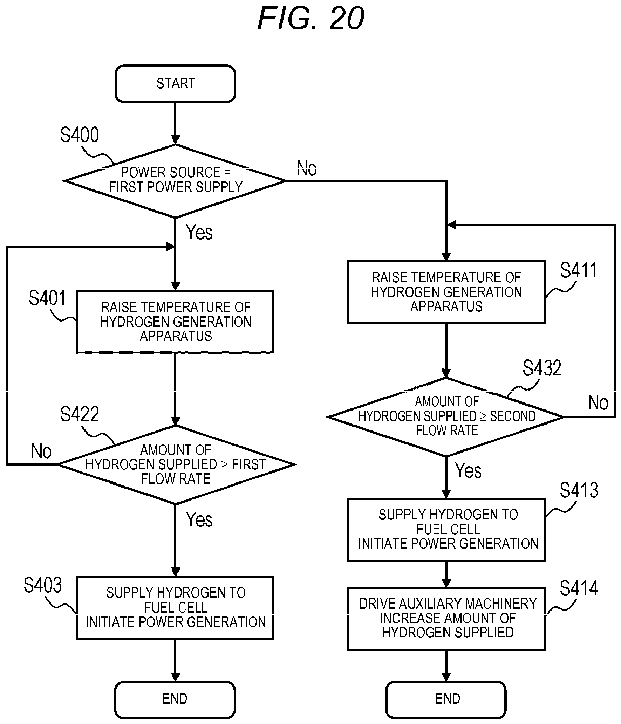

Next, an operation of driving the fuel cell system according to the first modification example of the fourth embodiment of the invention will be described in detail with reference to FIG. 20.

FIG. 20 is a flowchart illustrating an example of the first modification example of the operation of the fuel cell system according to the fourth embodiment of the invention.

In this flow, step S402 and step S412 in the flowchart of the fourth embodiment illustrated in FIG. 19 are substituted with step S422 and step S432, respectively. The other steps are the same as in the fourth embodiment, and thus description thereof will not be repeated.

(Start) An activation signal is input.

(Step S422) It is determined whether or not the amount of the hydrogen-containing gas supplied from hydrogen generation apparatus 15 is equal to or greater than a first supply amount (for example, 5 L/min). When the first supply amount (for example, 5 L/min) or greater of hydrogen-containing gas is supplied (YES in S422), the process transitions to step S403, and when the first supply amount (for example, 5 L/min) or greater of hydrogen-containing gas is not supplied (NO in S422), the process transitions to step S401.

(Step S403) Hydrogen is supplied to fuel cell 16 to initiate power generation.

(Step S411) The special activation operation of hydrogen generation apparatus 15 is initiated, and a temperature rise is performed.

(Step S432) Controller 6 determines whether or not the amount of hydrogen-containing gas supplied from hydrogen generation apparatus 15 is equal to or greater than a second supply amount (for example, 4 L/min) that is less than the first supply amount (for example, 5 L/min). When the second supply amount (for example, 4 L/min) or greater of hydrogen-containing gas is supplied (YES in S432), the process transitions to step S413, and when the second supply amount (for example, 4 L/min) or greater of hydrogen-containing gas is not supplied (NO in S432), the process transitions to step S411.

(Step S413) Hydrogen is supplied to fuel cell 16 to initiate power generation.

(Step S414) Controller 6 continues the temperature rise of hydrogen generation apparatus 15, increases the amount of hydrogen generated, and increases the amount of power generation so that the auxiliary machinery is driven with power that is generated, and hydrogen can be supplied in an amount, which corresponds to a minimum amount of power generation set in advance, or greater.

According to this, it is possible to transition to power generation at an early time in comparison to the typical activation illustrated in step S422. According to this, time taken to supply power for driving the auxiliary machinery from independent activation power supply 5 becomes shorter, and thus it is possible to decrease the amount of power supplied from independent activation power supply 5. Accordingly, it is possible to miniaturize independent activation power supply 5.

(End) Power is supplied to an outer side of the system.

With regard to the above description, it should be understood by those skilled in the art that a lot of modifications or other embodiments of the invention may be made. Accordingly, the above description is illustrative only, and is given to provide best modes for carrying out the invention to those skilled in the art. Details of at least one of the structure and the function can be substantially changed without departing from the spirit of the invention.

As described above, hydrogen generation apparatus 15 of the embodiments includes reformer 1 that reforms the raw material that contains hydrocarbon to generate a hydrogen-containing gas, raw material supply device 2 that supplies the raw material to reformer 1, combustor 3 that combusts at least one of the raw material and the hydrogen-containing gas to heat reformer 1, and combustion air supply device 4 that supplies combustion air to combustor 3. In addition, hydrogen generation apparatus 15 includes independent activation power supply 5 which supplies power to at least raw material supply device 2 and combustion air supply device 4, and controller 6. Controller 6 is configured to perform control of supplying power the auxiliary machinery including raw material supply device 2 and combustion air supply device 4 from at least a first power supply other than independent activation power supply 5 during the typical activation so as to activate the auxiliary machinery, and supplying power to the auxiliary machinery from only independent activation power supply 5 during the special activation, in which power is not supplied from the first power supply, so as to activate the auxiliary machinery. In addition, controller 6 is configured to perform control of setting a first heating amount during combustion in combustor 3 during the special activation to be greater than a second heating amount during combustion in combustor 3 during the typical activation.

According to this, the amount of heat that is input to hydrogen generation apparatus 15 during the special activation increases, and thus a temperature-rising rate to an appropriate temperature of a catalyst increases. Accordingly, it is possible to shorten power supply time from independent activation power supply 5 to the auxiliary machinery and it is possible to decrease the amount of power supplied. As a result, it is possible to miniaturize independent activation power supply 5.

In addition, in a case where during the special activation, the temperature of reformer 1 becomes equal to or higher than a temperature set in advance, or predetermined time has elapsed from combustion initiation of combustor 3, controller 6 may be configured to perform control of setting a heating amount during combustion in combustor 3 to be a third heating amount that is less than the first heating amount.

According to this, hydrogen generation apparatus 15 is heated with a higher heat amount in comparison to the typical operation, and thus it is possible to suppress thermal deterioration of the structure body and the catalyst to the minimum. In addition, during the special activation, hydrogen generation apparatus 15 is heated with a higher heating amount in comparison to the typical activation, and thus a frame length may be different from a frame length during the typical activation, and thus a heated portion may vary. According to this, although a temperature distribution of the catalyst may be different from a temperature distribution during the typical activation, efficiency during generation of the hydrogen-containing gas may decrease, or the quality of the hydrogen-containing gas generated may decrease, it is possible to suppress occurrence of these situations.

In addition, hydrogen generation apparatus 15 includes reformer 1 that reforms a raw material that contains hydrocarbon to generate a hydrogen-containing gas, raw material supply device 2 that supplies the raw material to the reformer, combustor 3 that combusts at least one of the raw material and the hydrogen-containing gas to heat the reformer, and water supply device 7 that supplies water to reformer 1. In addition, hydrogen generation apparatus 15 includes independent activation power supply 5 which supplies power to at least raw material supply device 2 and water supply device 7, and controller 6. In addition, controller 6 may be configured to perform control of supplying power to auxiliary machinery including raw material supply device 2 and water supply device 7 from at least a first power supply other than independent activation power supply 5 during the typical activation so as to activate the auxiliary machinery, and supplying power to the auxiliary machinery from only independent activation power supply 5 during the special activation, in which power is not supplied from the first power supply, so as to activate the auxiliary machinery. In addition, controller 6 may be configured to perform control of setting the first time from heating initiation of reformer 1 to initiation of water supply from water supply device 7 to reformer 1 during the special activation to be shorter than the second time from the heating initiation of reformer 1 to the initiation of water supply from water supply device 7 to reformer 1 during the typical activation.

According to this, water vapor reforming of hydrocarbon is initiated at an early time from the typical activation, or at a stage in which the temperature of reformer 1 is low. A gas volume increases through the water vapor reforming, and thus heat transfer to a catalyst downstream of reformer 1 is initiated at an early time, and thus it is possible to quicken the temperature rise of the catalyst. In addition, examples of the catalyst on a downstream side include a modification catalyst, a methanation catalyst, and a selective oxidation catalyst.

In addition, hydrogen generation apparatus 15 includes reformer 1 that reforms a raw material that contains hydrocarbon to generate a hydrogen-containing gas, raw material supply device 2 that supplies the raw material to reformer 1, combustor 3 that combusts at least one of the raw material and the hydrogen-containing gas to heat reformer 1, and water supply device 7 that supplies water to reformer 1. In addition, hydrogen generation apparatus 15 includes independent activation power supply 5 which supplies power to reformer temperature detector 8 that detects a temperature of reformer 1, and at least raw material supply device 2 and water supply device 7, and controller 6. Controller 6 may be configured to perform control of supplying power to auxiliary machinery including raw material supply device 2 and water supply device 7 from at least a first power supply other than independent activation power supply 5 during the typical activation so as to activate the auxiliary machinery, and supplying power to the auxiliary machinery from only independent activation power supply 5 during special activation, in which power is not supplied from the first power supply, so as to activate the auxiliary machinery. In addition, controller 6 may be configured to perform control of initiating water supply to reformer 1 when the temperature of reformer 1 becomes a first temperature during the special activation, and initiating water supply to reformer 1 when the temperature of reformer 1 becomes a second temperature higher than the first temperature during the typical activation.

According to this, water vapor reforming of hydrocarbon is initiated at an early time from the typical activation, or at a stage in which the temperature of reformer 1 is low. A gas volume increases through the water vapor reforming, and thus heat transfer to a catalyst downstream of a reforming portion is initiated at an early time, and thus it is possible to quicken the temperature rise of the catalyst. In addition, control is performed in accordance with the temperature of reformer 1 instead of time from the heating initiation, and thus it is possible to correct at least any one of differences in a temperature rise time due to the amount of heat of the raw material gas, a variation in an outside air temperature, and time from the previous activation, and thus it is possible to attain an effect of more quickly initiating heat transfer between catalysts.

In addition, controller 6 may be configured to perform control of supplying water to reformer 1 at a first flow rate during the special activation, and supplying water to reformer 1 at a second flow rate greater than the first flow rate during the typical activation.

According to this, even in a case where water supply is performed at an early time in comparison to the typical operation, it is possible to suppress condensation of a catalyst at a low-temperature portion, and thus it is possible to suppress deterioration of the catalyst.

In addition, hydrogen generation apparatus 15 may further include CO reducer 9 that reduces carbon monoxide in the hydrogen-containing gas supplied from reformer 1, and CO reducer temperature detector 10 that detects a temperature of the CO reducer. In addition, controller 6 may be configured to perform control of supplying water to reformer 1 at a third flow rate greater than the first flow rate in a case where the temperature of CO reducer 9 becomes equal to or higher than a third temperature during the special activation or a third time has elapsed from the combustion initiation of combustor 3.

According to this, the amount of hydrogen generated is increased when the temperature of CO reducer 9 is raised, and thus the possibility of condensation in CO reducer 9 disappears, and thus it is possible to further increase the heat transfer from reformer 1 due to an increase in the gas volume. In addition, the third flow rate and the second flow rate may be set to the same flow rate.

In addition, hydrogen generation apparatus 15 may include reformer 1 that reforms a raw material that contains hydrocarbon to generate a hydrogen-containing gas, raw material supply device 2 that supplies the raw material to reformer 1, combustor 3 that combusts at least one of the raw material and the hydrogen-containing gas to heat reformer 1, water supply device 7 that supplies water to reformer 1, and reformer temperature detector 8 that detects a temperature of reformer 1. In addition, hydrogen generation apparatus 15 may include independent activation power supply 5 that supplies power to at least raw material supply device 2 and water supply device 7, and controller 6. Controller 6 may be configured to perform control of supplying power to auxiliary machinery including raw material supply device 2 and water supply device 7 from at least a first power supply other than independent activation power supply 5 during typical activation so as to activate the auxiliary machinery, and supplying power to the auxiliary machinery from only independent activation power supply 5 during special activation, in which power is not supplied from the first power supply, so as to activate the auxiliary machinery. In addition, controller 6 may be configured to perform control of supplying water to reformer 1 at a fourth flow rate during the special activation, and supplying water to reformer 1 at a fifth flow rate less than the fourth flow rate during the typical activation.

The water vapor reforming reaction in reformer 1 is further promoted in comparison to the typical activation, and thus the gas volume further increases in comparison to the typical activation. Accordingly, the heat transfer to CO reducer 9 or selective oxidizer 11, which operates at a relatively lower temperature in comparison to reformer 1, is promoted, and thus it is possible to quicken the temperature rise of the catalyst downstream of reformer 1.

In addition, hydrogen generation apparatus 15 may further include CO reducer 9 that reduces carbon monoxide in the hydrogen-containing gas supplied from reformer 1, and CO reducer temperature detector 10 that detects a temperature of CO reducer 9. In addition, controller 6 may be configured to perform control of supplying water to reformer 1 at a sixth flow rate less than the fourth flow rate in a case where the temperature of CO reducer 9 becomes equal to or higher than a fourth temperature during the special activation or the fourth time has elapsed from the combustion initiation of combustor 3.

According to this, the amount of water supplied is reduced after the catalyst after reformer 1 becomes a sufficient temperature, and heat consumption due to generation of water vapor is suppressed, and thus heat efficiency is improved. In addition, the sixth flow rate may be the same as at least any one of the second flow rate and the fifth flow rate.

In addition, hydrogen generation apparatus 15 may further include selective oxidizer 11 that reduces carbon monoxide in the hydrogen-containing gas supplied from reformer 1 through an oxidation reaction, and oxygen-containing gas supply device 12 that supplies an oxygen-containing gas to selective oxidizer 11. In addition, controller 6 may be configured to perform control of supplying the oxygen-containing gas to selective oxidizer 11 at a seventh flow rate during the special activation, and supplying the oxygen-containing gas to selective oxidizer 11 at an eighth flow rate less than the seventh flow rate during the typical activation.

According to this, selective oxidizer 11 generates heat through the oxidation reaction of the hydrogen-containing gas or the fuel gas in CO reducer 9, and thus it is possible to raise a temperature of selective oxidizer 11 at an early time from the typical operation.

In addition, hydrogen generation apparatus 15 may further include selective oxidizer temperature detector 13 that detects a temperature of selective oxidizer 11, and controller 6 may be configured to perform control of supplying the oxygen-containing gas to selective oxidizer 11 at a ninth flow rate less than the seventh flow rate in a case where the temperature of selective oxidizer 11 becomes equal to or higher than a fifth temperature during the special activation or the fifth time has elapsed from the combustion initiation of combustor 3.

According to this, the amount of the oxygen-containing gas supplied is reduced when the temperature of selective oxidizer 11 becomes a predetermined temperature, and thus it is possible to suppress a decrease in efficiency due to oxidation of the hydrogen-containing gas. In addition, the ninth flow rate may be the same as the eighth flow rate.

In addition, controller 6 may be configured to perform control of transitioning to the typical activation in a case where power is supplied from the first power supply other than independent activation power supply 5 during the special activation.

According to this, when power is supplied from the first power supply during the special activation, the special activation transitions to the typical activation, and thus it is possible to reduce the number of times of the special activation. During the special activation, heating is performed with a higher heating amount in comparison to the typical activation, or water supply is performed at early timing, that is, in a state in which the temperature of the catalyst is lower in comparison to the typical activation. Accordingly, a possibility of thermal deterioration of the structure body and leakage of the catalyst increases. However, when reducing the number of times of the special activation, it is possible to suppress an effect from the above-described situations.

In addition, the controller may be configured to perform control of transitioning to the typical activation in a case where power is supplied from the first power supply other than independent activation power supply 5 during the special activation, and time elapsed from the combustion initiation of combustor 3 is shorter than predetermined time.

During the special activation, hydrogen generation apparatus 15 is heated with a higher combustion amount in comparison to the typical activation. According to this, the temperature of reformer 1, which exists in the vicinity of combustor 3 of hydrogen generation apparatus 15, is raised at a higher speed in comparison to the typical activation. Accordingly, thermal damage to the structure body further increases in comparison to the typical activation. In addition, during the special activation, water is supplied to reformer 1 with a greater amount in comparison to the typical activation. According to this, in a case where the temperature of a part of the catalyst is lower than an assumed temperature, a leakage risk of the catalyst increases. On the other hand, when predetermined time has elapsed from combustion initiation, the combustion amount and the amount of water supplied are further reduced than initial values during the special activation. According to this, even when transitioning to the typical activation at this stage, an effect thereof is small. In this embodiment, in a case where power is supplied from the first power supply at a stage in which at least any one of the heating amount and the amount of water supplied is further increased in comparison to the typical activation, at least any one of the heating amount and the amount of water supplied is changed to a value during the typical activation, and thus it is possible to effectively reduce a thermal effect on the structure body and the leakage risk of the catalyst.

In addition, controller 6 may be configured to perform control of transitioning to the typical activation in a case where power is supplied from the first power supply other than the independent activation power supply during the special activation, and the temperature of reformer 1 is lower than a predetermined temperature.

According to this, the heating amount is further increased in comparison to the special activation, and thus it is possible to suppress a possibility of the thermal damage and the leakage of the catalyst. In addition, control is performed in accordance with the temperature of reformer 1 instead of time from heating initiation. Accordingly, it is possible to correct a difference in a temperature rise time due to any one of the amount of heat of the raw material gas, a variation in an outside air temperature, and time from the previous activation, and thus it is possible to attain an effect capable of making a determination of transitioning to the typical activation with higher accuracy.

In addition, controller 6 may be configured to perform control of transitioning to the typical activation in a case where power is supplied from the first power supply other than independent activation power supply 5 during the special activation, and the temperature of CO reducer 9 is lower than the fourth temperature, or time elapsed from the combustion initiation of combustor 3 is shorter than the fourth time.

According to this, in a case where power is supplied from the first power supply during the special activation, it is possible to reduce the amount of water supplied to reformer 1, which is further increased in comparison to the typical activation, at an early time, and thus it is possible to suppress the leakage of the catalyst inside CO reducer 9 and selective oxidizer 11.

In addition, controller 6 may be configured to perform control of transitioning to the special activation in a case where power supply from the first power supply other than independent activation power supply 5 is shut off during the typical activation.

According to this, even in a case where power supply from the first power supply is shut off immediately after determination of a power source, it is possible to transition to the special activation. When power supply from the first power supply is shut off immediately after determination of the power source, if activation is performed with the typical activation, power supply time from independent activation power supply 5 further increases in comparison to the special activation, and thus the amount of power supplied increases. Accordingly, so as to perform activation even in this case, it is necessary to make independent activation power supply 5 large. However, in a case of transitioning to the special activation when power supply from the first power supply is shut off during activation, it is possible to shorten activation time, and thus it is possible to decrease the amount of power supplied from independent activation power supply 5 to the auxiliary machinery. Accordingly, it is possible to miniaturize independent activation power supply 5.

In addition, controller 6 may be configured to perform control of continuing monitoring of a residual amount of power of independent activation power supply 5 after power supply from the first power supply other than independent activation power supply 5 during the typical activation is shut off, and transitioning to the special activation in a case where the residual amount of power of independent activation power supply 5 is less than the amount of power that is necessary to continue activation through the typical activation.

According to this, in a case where there is a room for the power capacity of independent activation power supply 5 in comparison to the amount of power necessary to complete activation through the typical activation, activation through the typical activation continues. Accordingly, it is possible to reduce the number of times of the special activation to the minimum, and thus it is possible to suppress an effect on the structure body and the catalyst due to the special activation.

In addition, controller 6 may be configured to perform control of detecting the residual amount of power of independent activation power supply 5 in a case where power supply from the first power supply other than independent activation power supply 5 is shut off during the typical activation, and stopping activation operation in a case where the detected residual amount of power of independent activation power supply 5 is less than the amount of power necessary to continue activation through the special activation.

According to this, in a case where power supply from the first power supply is shut off during activation, and activation is also difficult even through the special activation, a typical stopping operation including a purge operation is performed by using power of independent activation power supply 5. According to this, it is possible to suppress the leakage of the catalyst. When the catalyst is leaked, there is a concern that performance deteriorates. In addition, when the catalyst is leaked, there is a problem in that the temperature rise of the catalyst gets late during the subsequent activation. Accordingly, it is possible to suppress deterioration of the performance of the catalyst through suppression of the leakage, and it is possible to suppress extension of activation time during the subsequent activation for drying of the catalyst that is leaked.

In addition, controller 6 may be configured to perform control of continuing monitoring of the residual amount of power of independent activation power supply 5 after power supply from the first power supply other than independent activation power supply 5 is shut off during the typical activation, and stopping activation operation in a case where the residual amount of power of independent activation power supply 5 is less than the amount of power that is necessary to continue activation through the special activation.

According to this, even in a case where estimation of the residual amount of power of independent activation power supply 5 at the point of time at which power supply from the first power supply is shut off, or estimation of power necessary for activation is not correctly made due to an effect such as deterioration of a battery and unexpected discharging, it is possible to attain an effect capable of transitioning to a stopping operation.

In addition, fuel cell system 100 of the embodiment includes hydrogen generation apparatus 15 having any one of the configurations described above, and fuel cell 16 that performs power generation by using the hydrogen-containing gas supplied from hydrogen generation apparatus 15. In addition, controller 6 may be configured to perform control of initiating power generation of fuel cell 16 in a case where the amount of a hydrogen-containing gas supplied from hydrogen generation apparatus 15 during the typical activation becomes equal to or greater than a first supply amount, and initiating the power generation of fuel cell 16 in a case where the amount of the hydrogen-containing gas supplied from hydrogen generation apparatus 15 during the special activation becomes equal to or greater than a second supply amount less than the first supply amount so as to supply power to the auxiliary machinery.

According to this, when hydrogen is generated in hydrogen generation apparatus 15 in an amount with which fuel cell 16 can generate power necessary for the auxiliary machinery, transitioning to a power generation state is made quickly, and thus it is possible to reduce the amount of power supplied from independent activation power supply 5 to the auxiliary machinery. According to this, it is possible to miniaturize the size of independent activation power supply 5.

In addition, controller 6 of fuel cell system 100 may be configured to perform control of initiating power generation of fuel cell 16 in a case where the temperature of reformer 1 becomes equal to or higher than a sixth temperature during the typical activation, and initiating power generation of fuel cell 16 in a case where the temperature of reformer 1 becomes equal to or higher than a seventh temperature lower than the sixth temperature during the special activation so as to supply power to the auxiliary machinery.

According to this, when fuel cell 16 can generate power necessary for the auxiliary machinery by using hydrogen generated in hydrogen generation apparatus 15, transitioning to a power generation state is quickly made, and power is supplied to the auxiliary machinery. Accordingly, it is possible to decrease the amount of power supplied from independent activation power supply 5 to the auxiliary machinery, and thus it is possible to miniaturize the size of the independent activation power supply. In addition, a concentration of hydrogen in the hydrogen-containing gas depends on the temperature of reformer 1. Accordingly, when control is performed in accordance with the temperature of reformer 1, it is possible to more accurately estimate the amount of hydrogen, and the hydrogen-containing gas can be supplied to fuel cell 16 in the shortest time so as to initiate power generation. Accordingly, it is possible to attain an effect of additionally reducing the amount of power supplied from independent activation power supply 5.

In addition, a method for driving hydrogen generation apparatus 15 of the embodiment is a method for driving hydrogen generation apparatus 15 including reformer 1 that reforms a raw material that contains hydrocarbon to generate a hydrogen-containing gas, raw material supply device 2 that supplies the raw material to the reformer, combustor 3 that combusts at least one of the raw material and the hydrogen-containing gas to heat reformer 1. In addition, the method is a method for driving the hydrogen generation apparatus including combustion air supply device 4 that supplies combustion air to combustor 3, and independent activation power supply 5 which supplies power to at least raw material supply device 2 and combustion air supply device 4. In addition, the method includes a step of supplying power to auxiliary machinery including raw material supply device 2 and combustion air supply device 4 from at least a first power supply other than independent activation power supply 5 during typical activation so as to activate the auxiliary machinery, and a step of supplying power to the auxiliary machinery from only independent activation power supply 5 during special activation, in which power is not supplied from the first power supply, so as to activate the auxiliary machinery, and setting a first heating amount during combustion in combustor 3 during the special activation to be greater than a second heating amount during combustion in combustor 3 during the typical activation.

According to this, the amount of heat that is input to hydrogen generation apparatus 15 during the special activation increases, and thus a temperature-rising rate to an appropriate temperature of the catalyst increases. Accordingly, it is possible to shorten power supply time from independent activation power supply 5 to the auxiliary machinery and it is possible to decrease the amount of power supplied. As a result, it is possible to miniaturize independent activation power supply 5.

In addition, the method for driving hydrogen generation apparatus 15 is a method for driving hydrogen generation apparatus 15 including reformer 1 that reforms a raw material that contains hydrocarbon to generate a hydrogen-containing gas, raw material supply device 2 that supplies the raw material to the hydrogen generation apparatus, the combustor that combusts at least one of the raw material and the hydrogen-containing gas to heat reformer 1, water supply device 7 that supplies water to reformer 1, and independent activation power supply 5 which supplies power to at least raw material supply device 2 and water supply device 7. In addition, the method may include a step of supplying power to auxiliary machinery including raw material supply device 2 and water supply device 7 from at least a first power supply other than independent activation power supply 5 during typical activation so as to activate the auxiliary machinery, and a step of supplying power to the auxiliary machinery from only independent activation power supply 5 during special activation, in which power is not supplied from the first power supply, so as to activate the auxiliary machinery. In addition, the method may include a step of setting the first time from heating initiation of reformer 1 to initiation of water supply from water supply device 7 to reformer 1 during the special activation to be shorter than the second time from the heating initiation of reformer 1 to the initiation of water supply from water supply device 7 to reformer 1 during the typical activation.

According to this, water vapor reforming of hydrocarbon is initiated at an early time from the typical activation, or at a stage in which the temperature of reformer 1 is low. A gas volume increases through the water vapor reforming, and thus heat transfer to a catalyst downstream of reformer 1 is initiated at an early time, and thus it is possible to quicken the temperature rise of the catalyst. In addition, examples of the catalyst on a downstream side include a modification catalyst, a methanation catalyst, and a selective oxidation catalyst.

In addition, the method for driving the hydrogen generation apparatus is a method for driving a fuel cell system including reformer 1 that reforms a raw material that contains hydrocarbon to generate a hydrogen-containing gas, raw material supply device 2 that supplies the raw material to reformer 1, combustor 3 that combusts at least one of the raw material and the hydrogen-containing gas to heat reformer 1, water supply device 7 that supplies water to reformer 1, and independent activation power supply 5 which supplies power to at least raw material supply device 2 and water supply device 7. The method may include a step of supplying power to auxiliary machinery including raw material supply device 2 and water supply device 7 from at least a first power supply other than independent activation power supply 5 during typical activation so as to activate the auxiliary machinery, and a step of supplying power to the auxiliary machinery from only independent activation power supply 5 during special activation, in which power is not supplied from the first power supply, so as to activate the auxiliary machinery. In addition, the method may include a step of initiating water supply to reformer 1 when the temperature of reformer 1 becomes a first temperature during the special activation, and a step of initiating water supply to reformer 1 when the temperature of reformer 1 becomes a second temperature higher than the first temperature during the typical activation.

According to this, water vapor reforming of hydrocarbon is initiated at an early time from the typical activation, or at a stage in which the temperature of reformer 1 is low. A gas volume increases through the water vapor reforming, and thus heat transfer to a catalyst downstream of a reforming portion is initiated at an early time, and thus it is possible to quicken the temperature rise of the catalyst. In addition, control is performed in accordance with the temperature of reformer 1 instead of time from the heating initiation, and thus it is possible to correct at least any one of differences in the temperature rise time due to the amount of heat of the raw material gas, a variation in an outside air temperature, and time from the previous activation, and thus it is possible to attain an effect of more quickly initiating heat transfer between catalysts.

In addition, the method for driving hydrogen generation apparatus 15 is a method for driving the hydrogen generation apparatus including reformer 1 that reforms a raw material that contains hydrocarbon to generate a hydrogen-containing gas, raw material supply device 2 that supplies the raw material to reformer 1, combustor 3 that combusts at least one of the raw material and the hydrogen-containing gas to heat reformer 1, water supply device 7 that supplies water to reformer 1, and independent activation power supply 5 that supplies power to at least raw material supply device 2 and water supply device 7. In addition, the method may include a step of supplying power to auxiliary machinery including raw material supply device 2 and water supply device 7 from at least a first power supply other than independent activation power supply 5 during typical activation so as to activate the auxiliary machinery, a step of supplying power to the auxiliary machinery from only independent activation power supply 5 during special activation, in which power is not supplied from the first power supply, so as to activate the auxiliary machinery, a step of supplying water to reformer 1 at a fourth flow rate during the special activation, and a step of supplying water to reformer 1 at a fifth flow rate less than the fourth flow rate during the typical activation.

According to this, the water vapor reforming reaction in reformer 1 is further promoted in comparison to the typical activation, and thus the gas volume further increases in comparison to the typical activation. Accordingly, the heat transfer to at least one of CO reducer 9 and selective oxidizer 11, which operate at a relatively lower temperature in comparison to reformer 1, is promoted, and thus it is possible to attain an effect capable of quickening the temperature rise of the catalyst downstream of reformer 1.

### INDUSTRIAL APPLICABILITY

As described above, according to the invention, during activation with power supply from the independent activation power supply, it is possible to raise the temperature of the catalyst at an early time in comparison to the related art, and thus it is possible to shorten activation time. Accordingly, it is possible to reduce the amount of power that is consumed in the auxiliary machinery, and thus it is possible to attain a remarkable effect capable of miniaturizing the independent activation power supply. Accordingly, the invention is suitable for a hydrogen generation apparatus, a fuel cell system, and the like which have an activation mode of reducing power consumption in a case where activation power is supplied from the independent activation power supply. Particularly, the invention is suitable for a use in which the independent activation power supply used during power failure is intended to be miniaturized, for example, a household fuel cell cogeneration system, and the like.

### REFERENCE MARKS IN THE DRAWINGS

- 1: Reformer
- 2: Raw material supply device
- 3: Combustor
- 4: Combustion air supply device
- 5: Independent activation power supply
- 6: Controller
- 7: Water supply device
- 8: Reformer temperature detector
- 9: CO reducer
- 10: CO reducer temperature detector
- 11: Selective oxidizer
- 12: Oxygen-containing gas supply device
- 13: Selective oxidizer temperature detector
- 14: Water supply device downstream flow passage
- 15: Hydrogen generation apparatus
- 16: Fuel cell
- 100: Fuel cell system

## Claims

1. A hydrogen generation apparatus, comprising:
a reformer (1) configured to reform a raw material that contains hydrocarbon to generate a hydrogen-containing gas;
a raw material supply device (2) configured to supply the raw material to the reformer (1);
a combustor (3) configured to combust at least one of the raw material and the hydrogen-containing gas to heat the reformer (1);
a combustion air supply device (4) configured to supply combustion air to the combustor (3);
an independent activation power supply (5) which is a power source independent of a first power supply, the independent activation power supply (5) configured to supply power to at least the raw material supply device (2) and the combustion air supply device (4); and
a controller (6) configured to supply power to auxiliary machinery including the raw material supply device (2) and the combustion air supply device (4) from at least the first power supply other than the independent activation power supply (5) to activate the auxiliary machinery during typical activation, supply power to the auxiliary machinery from only the independent activation power supply (5) to activate the auxiliary machinery during special activation, in which power is not supplied from the first power supply, and
**characterized in that**
the controller (6) is configured to control combustion in the combustor (3) such that a first heating amount produced by the combustion during the special activation becomes greater than a second heating amount produced by the combustion during the typical activation, wherein the typical activation is an operation where power is being supplied from the first power supply, and the special activation is an operation where power is being supplied from only independent activation power supply (5), and wherein the heating amount is the amount of heat with which the hydrogen generation apparatus is heated through combustion, and
wherein in a case where a temperature of the reformer (1) becomes equal to or higher than a temperature set in advance, or predetermined time has elapsed from combustion initiation of the combustor (3) during the special activation, the controller (6) is configured to control combustion in the combustor (3) so that a heating amount becomes a third heating amount that is less than the first heating amount.

2. The hydrogen generation apparatus of claim 1, further comprising:
a selective oxidizer (11) configured to reduce carbon monoxide in the hydrogen-containing gas supplied from the reformer (1) by an oxidation reaction; and
an oxygen-containing gas supply device (12) configured to supply an oxygen-containing gas to the selective oxidizer (11),
wherein the controller (6) is configured to control supply of the oxygen-containing gas to the selective oxidizer (11) at a seventh flow rate during the special activation, and at an eighth flow rate less than the seventh flow rate during the typical activation.

3. The hydrogen generation apparatus of claim 2, further comprising:
a selective oxidizer temperature detector (13) configured to detect a temperature of the selective oxidizer (11),
wherein the controller (6) is configured to control supply of the oxygen-containing gas to the selective oxidizer (11) at a ninth flow rate less than the seventh flow rate in a case where the temperature of the selective oxidizer (11) becomes equal to or higher than a fifth temperature or a fifth time has elapsed from the combustion initiation of the combustor (3) during the special activation.

4. The hydrogen generation apparatus of any one of claims 1 to 3, wherein, when power is supplied from the first power supply other than the independent activation power supply (5) during the special activation, the controller (6) is configured to shift from the special activation to the typical activation.

5. The hydrogen generation apparatus of claim 1, wherein, when power is supplied from the first power supply other than the independent activation power supply (5) and time elapsed from the combustion initiation of the combustor (3) is shorter than predetermined time during the special activation, the controller (6) is configured to shift from the special activation to the typical activation.

6. The hydrogen generation apparatus of claim 1, wherein, when power is supplied from the first power supply other than the independent activation power supply (5) and the temperature of the reformer (1) is lower than a predetermined temperature during the special activation, the controller (6) is configured to shift from the special activation to the typical activation.

7. The hydrogen generation apparatus of any one of claims 1 to 6, wherein, when power supply from the first power supply other than the independent activation power supply (5) is shut off during the typical activation, the controller (6) is configured to shift from the typical activation to the special activation.

8. The hydrogen generation apparatus of claim 7, wherein the controller (6) is configured to continue monitoring of a residual amount of power of the independent activation power supply (5) after power supply from the first power supply other than the independent activation power supply (5) during the typical activation is shut off, and when the residual amount of power of the independent activation power supply (5) is less than the amount of power that is necessary to continue activation through the typical activation, the controller (6) is configured to shift from typical activation to the special activation.

9. The hydrogen generation apparatus of any one of claims 1 to 8, wherein the controller (6) is configured to detect the residual amount of power of the independent activation power supply (5), when power supply from the first power supply other than the independent activation power supply (5) is shut off during the typical activation, and stop activation operation when the detected residual amount of power of the independent activation power supply (5) is less than the amount of power necessary to continue activation through the special activation.

10. A fuel cell system, comprising:
the hydrogen generation apparatus (15) of any one of claims 1 to 9; and
a fuel cell (16) configured to perform power generation by using a hydrogen-containing gas that is supplied from the hydrogen generation apparatus (15),
wherein the controller (6) is configured to initiate power generation of the fuel cell (16) when the amount of a hydrogen-containing gas supplied from the hydrogen generation apparatus (15) during the typical activation becomes equal to or greater than a first supply amount, and initiate the power generation of the fuel cell (16) when the amount of the hydrogen-containing gas supplied from the hydrogen generation apparatus (15) during the special activation becomes equal to or greater than a second supply amount less than the first supply amount so as to supply power to the auxiliary machinery.

11. A fuel cell system, comprising:
the hydrogen generation apparatus (15) of any one of claims 1 to 9; and
a fuel cell (16) configured to perform power generation by using a hydrogen-containing gas that is supplied from the hydrogen generation apparatus (15),
wherein the controller (6) is configured to initiate power generation of the fuel cell (16) when the temperature of the reformer (1) becomes equal to or higher than a sixth temperature during the typical activation, and initiate power generation of the fuel cell (16) when the temperature of the reformer (1) becomes equal to or higher than a seventh temperature lower than the sixth temperature during the special activation so as to supply power to the auxiliary machinery.

12. A method for operating a hydrogen generation apparatus including a reformer (1) configured to reform a raw material that contains hydrocarbon to generate a hydrogen-containing gas, a raw material supply device (2) configured to supply the raw material to the reformer (1), a combustor (3) configured to combust at least one of the raw material and the hydrogen-containing gas to heat the reformer (1), a combustion air supply device (4) configured to supply combustion air to the combustor (3), and an independent activation power supply (5) which is a power source independent of a first power supply, the independent activation power supply (5) configured to supply power to at least the raw material supply device (2) and the combustion air supply device (4), the method comprising:
a step of supplying power to auxiliary machinery including the raw material supply device (2) and the combustion air supply device (4) from at least a first power supply other than the independent activation power supply (5) to activate the auxiliary machinery during typical activation;
**characterized by**
a step of supplying power to the auxiliary machinery from only the independent activation power supply (5) to activate the auxiliary machinery during special activation, in which power is not supplied from the first power supply, and increasing a first heating amount produced by the combustion in the combustor (3) during the special activation to become greater than a second heating amount produced by the combustion in the combustor (3) during the typical activation, wherein the typical activation is an operation where power is being supplied from the first power supply, and the special activation is an operation where power is being supplied from only independent activation power supply (5), and wherein the heating amount is the amount of heat with which the hydrogen generation apparatus is heated through combustion; and
a step of controlling combustion in the combustor (3) so that a heating amount becomes a third heating amount that is less than the first heating amount when a temperature of the reformer (1) becomes equal to or higher than a temperature set in advance, or predetermined time has elapsed from combustion initiation of the combustor (3) during the special activation.

## Patentansprüche

1. Wasserstofferzeugungs-Vorrichtung, die umfasst:
einen Reformer (1), der so ausgeführt ist, dass er einen Rohstoff, der Kohlenwasserstoff enthält, reformiert, um ein wasserstoffhaltiges Gas zu erzeugen;
eine Rohstoff-Zuführeinrichtung (2), die so ausgeführt ist, dass sie dem Reformer (1) den Rohstoff zuführt;
einen Brenner (3), der so ausgeführt ist, dass er den Rohstoff oder/und das wasserstoffhaltige Gas verbrennt, um den Reformer (1) zu erwärmen;
eine Verbrennungsluft-Zuführeinrichtung (4), die so ausgeführt ist, dass sie dem Brenner (3) Verbrennungsluft zuführt;
eine Stromversorgungseinrichtung (5) für unabhängige Aktivierung, die eine von einer ersten Stromversorgungseinrichtung unabhängige Stromquelle ist, wobei die Stromversorgungseinrichtung (5) für unabhängige Aktivierung so ausgeführt ist, dass sie wenigstens der Rohstoff-Zuführeinrichtung (2) und der Verbrennungsluft-Zuführeinrichtung (4) Strom zuführt; sowie
eine Steuerungseinrichtung (6), die so ausgeführt ist, dass sie Hilfsaggregaten, die die Rohstoff-Zuführeinrichtung (2) und die Verbrennungsluft-Zuführeinrichtung (4) einschließen, Strom wenigstens von der ersten Stromversorgungseinrichtung, das heißt nicht von der Stromversorgungseinrichtung (5) für unabhängige Aktivierung, zuführt, um die Hilfsaggregate bei normaler Aktivierung zu aktivieren, den Hilfsaggregaten Strom nur von der Stromversorgungseinrichtung (5) für unabhängige Aktivierung zuführt, um die Hilfsaggregate bei spezieller Aktivierung zu aktivieren, bei der kein Strom von der ersten Stromversorgungseinrichtung zugeführt wird, und
**dadurch gekennzeichnet, dass**
die Steuerungseinrichtung (6) so ausgeführt ist, dass sie Verbrennung in dem Brenner (3) so steuert, dass ein erstes Maß an Erwärmung, das durch die Verbrennung bei der speziellen Aktivierung bewirkt wird, ein zweites Maß an Erwärmung übersteigt, das durch die Verbrennung bei der normalen Aktivierung bewirkt wird, wobei die normale Aktivierung ein Vorgang ist, bei dem Strom von der ersten Stromversorgungseinrichtung zugeführt wird, und die spezielle Aktivierung ein Vorgang ist, bei dem Strom nur von der unabhängigen Stromversorgungseinrichtung (5) für unabhängige Aktivierung zugeführt wird, und das Maß an Erwärmung die Wärmemenge ist, mit der die Wasserstofferzeugungs-Vorrichtung mittels Verbrennung erwärmt wird, und
wobei die Steuerungseinrichtung (6) so ausgeführt ist, dass sie, wenn bei der speziellen Aktivierung eine Temperatur des Reformers (1) eine im Voraus eingestellte Temperatur erreicht oder überschreitet oder eine vorgegebene Zeit seit Einleitung von Verbrennung des Brenners (3) verstrichen ist, Verbrennung in dem Brenner (3) so steuert, dass ein Maß an Erwärmung ein drittes Maß an Erwärmung erreicht, das geringer ist als das erste Maß an Erwärmung.

2. Wasserstofferzeugungs-Vorrichtung nach Anspruch 1, die des Weiteren umfasst:
eine Einrichtung (11) für selektive Oxidation, die so ausgeführt ist, dass sie Kohlenmonoxid in dem von dem Reformer (1) zugeführten wasserstoffhaltigen Gas mittels einer Oxidationsreaktion reduziert; und
eine Einrichtung (12) für Zufuhr von sauerstoffhaltigem Gas, die so ausgeführt ist, dass sie der Einrichtung (11) für selektive Oxidation ein sauerstoffhaltiges Gas zuführt,
wobei die Steuerungseinrichtung (6) so ausgeführt ist, dass sie Zufuhr des sauerstoffhaltigen Gases zu der Einrichtung (11) für selektive Oxidation bei der speziellen Aktivierung mit einer siebten Strömungsmenge und bei der normalen Aktivierung mit einer achten Strömungsmenge steuert, die geringer ist als die siebte Strömungsmenge.

3. Wasserstofferzeugungs-Vorrichtung nach Anspruch 2, die des Weiteren umfasst:
einen Temperaturdetektor (13) für die Einrichtung für selektive Oxidation, der so ausgeführt ist, dass er eine Temperatur der Einrichtung (11) für selektive Oxidation erfasst,
wobei die Steuerungseinrichtung (6) so ausgeführt ist, dass sie Zufuhr des sauerstoffhaltigen Gases zu der Einrichtung (11) für selektive Oxidation bei der speziellen Aktivierung mit einer neunten Strömungsmenge steuert, die geringer ist als die siebte Strömungsmenge, wenn die Temperatur der Einrichtung (11) für selektive Oxidation eine fünfte Temperatur erreicht oder überschreitet oder eine fünfte Zeit seit Einleitung von Verbrennung des Brenners (3) verstrichen ist.

4. Wasserstofferzeugungs-Vorrichtung nach einem der Ansprüche 1 bis 3, wobei die Steuerungseinrichtung (6) so ausgeführt ist, dass sie, wenn bei der speziellen Aktivierung Strom von der ersten Stromversorgungseinrichtung, das heißt, nicht von der Stromversorgungseinrichtung (5) für unabhängige Aktivierung, zugeführt wird, von der speziellen Aktivierung zu der normalen Aktivierung übergeht.

5. Wasserstofferzeugungs-Vorrichtung nach Anspruch 1, wobei die Steuerungseinrichtung (6) so ausgeführt ist, dass sie, wenn bei der speziellen Aktivierung Strom von der ersten Stromversorgungseinrichtung, das heißt, nicht von der Stromversorgungseinrichtung (5) für unabhängige Aktivierung, zugeführt wird und die Zeit, die seit Einleitung von Verbrennung des Brenners (3) verstrichen ist, kürzer ist als die vorgegebene Zeit, von der speziellen Aktivierung zu der normalen Aktivierung übergeht.

6. Wasserstofferzeugungs-Vorrichtung nach Anspruch 1, wobei die Steuerungseinrichtung (6) so ausgeführt ist, dass sie, wenn bei der speziellen Aktivierung Strom von der ersten Stromversorgungseinrichtung, das heißt, nicht von der Stromversorgungseinrichtung (5) für unabhängige Aktivierung, zugeführt wird und die Temperatur des Reformers (1) niedriger ist als eine vorgegebene Temperatur, von der speziellen Aktivierung zu der normalen Aktivierung übergeht.

7. Wasserstofferzeugungs-Vorrichtung nach einem der Ansprüche 1 bis 6, wobei die Steuerungseinrichtung (6) so ausgeführt ist, dass sie, wenn bei der normalen Aktivierung Stromzufuhr von der ersten Stromversorgungseinrichtung, das heißt, nicht von der Stromversorgungseinrichtung (5) für unabhängige Aktivierung, abgeschaltet wird, von der normalen Aktivierung zu der speziellen Aktivierung übergeht.

8. Wasserstofferzeugungs-Vorrichtung nach Anspruch 7, wobei die Steuerungseinrichtung (6) so ausgeführt ist, dass sie Überwachen einer Rest-Strommenge der Stromversorgungseinrichtung (5) für unabhängige Aktivierung fortsetzt, nachdem bei der speziellen Aktivierung Stromzufuhr von der ersten Stromversorgungseinrichtung, das heißt, nicht von der Stromversorgungseinrichtung (5) für unabhängige Aktivierung, abgeschaltet wird, und die Steuerungseinrichtung (6) so ausgeführt ist, dass sie, wenn die Rest-Strommenge der Stromversorgungseinrichtung (5) für unabhängige Aktivierung geringer ist als die Strommenge, die erforderlich ist, um Aktivierung mittels der normalen Aktivierung fortzusetzen, von der normalen Aktivierung zu der speziellen Aktivierung übergeht.

9. Wasserstofferzeugungs-Vorrichtung nach einem der Ansprüche 1 bis 8, wobei die Steuerungseinrichtung (6) so ausgeführt ist, dass sie die Rest-Strommenge der Stromversorgungseinrichtung (5) für unabhängige Aktivierung erfasst, wenn bei der normalen Aktivierung Stromzufuhr von der ersten Stromversorgungseinrichtung, das heißt, nicht von der Stromversorgungseinrichtung (5) für unabhängige Aktivierung, abgeschaltet wird, und den Aktivierungsvorgang unterbricht, wenn die erfasste Rest-Strommenge der Stromversorgungseinrichtung (5) für unabhängige Aktivierung geringer ist als die Strommenge, die erforderlich ist, um Aktivierung mittels der speziellen Aktivierung fortzusetzen.

10. Brennstoffzellen-System, das umfasst:
die Wasserstofferzeugungs-Vorrichtung (15) nach einem der Ansprüche 1 bis 9; und
eine Brennstoffzelle (16), die so ausgeführt ist, dass sie Stromerzeugung unter Verwendung eines wasserstoffhaltigen Gases durchführt, das von der Wasserstofferzeugungs-Vorrichtung (15) zugeführt wird,
wobei die Steuerungseinrichtung (6) so ausgeführt ist, dass sie Stromerzeugung der Brennstoffzelle (16) einleitet, wenn bei der normalen Aktivierung die Menge eines von der Wasserstofferzeugungs-Vorrichtung (15) zugeführten wasserstoffhaltigen Gases eine erste Zuführmenge erreicht oder überschreitet, und die Stromerzeugung der Brennstoffzelle (16) einleitet, wenn bei der speziellen Aktivierung die Menge des von der Wasserstofferzeugungs-Vorrichtung (15) zugeführten wasserstoffhaltigen Gases eine zweite Zuführmenge erreicht oder überschreitet, die geringer ist als die erste Zuführmenge, um den Hilfsaggregaten Strom zuzuführen.

11. Brennstoffzellen-System, das umfasst:
die Wasserstofferzeugungs-Vorrichtung (15) nach einem der Ansprüche 1 bis 9; und
eine Brennstoffzelle (16), die so ausgeführt ist, dass sie Stromerzeugung unter Verwendung eines wasserstoffhaltigen Gases durchführt, das von der Wasserstofferzeugungs-Vorrichtung (15) zugeführt wird,
wobei die Steuerungseinrichtung (6) so ausgeführt ist, dass sie Stromerzeugung der Brennstoffzelle (16) einleitet, wenn bei der normalen Aktivierung die Temperatur des Reformers (1) eine sechste Temperatur erreicht oder überschreitet, und Stromerzeugung der Brennstoffzelle (16) einleitet, wenn bei der speziellen Aktivierung die Temperatur des Reformers (1) eine siebte Temperatur erreicht oder überschreitet, die niedriger ist als die sechste Temperatur, um den Hilfsaggregaten Strom zuzuführen.

12. Verfahren zum Betreiben einer Wasserstofferzeugungs-Vorrichtung, die einen Reformer (1), der so ausgeführt ist, dass er einen Rohstoff, der Kohlenwasserstoff enthält, reformiert, um ein wasserstoffhaltiges Gas zu erzeugen, eine Rohstoff-Zuführeinrichtung (2), die so ausgeführt ist, dass sie dem Reformer (1) den Rohstoff zuführt, einen Brenner (3), der so ausgeführt ist, dass er den Rohstoff oder/und das wasserstoffhaltige Gas verbrennt, um den Reformer (1) zu erwärmen, eine Verbrennungsluft-Zuführeinrichtung (4), die so ausgeführt ist, dass sie dem Brenner (3) Verbrennungsluft zuführt, sowie eine Stromversorgungseinrichtung (5) für unabhängige Aktivierung enthält, die eine von einer ersten Stromversorgungseinrichtung unabhängige Stromquelle ist, wobei die Stromversorgungseinrichtung (5) für unabhängige Aktivierung so ausgeführt ist, dass sie wenigstens der Rohstoff-Zuführeinrichtung (2) und der Verbrennungsluft-Zuführeinrichtung (4) Strom zuführt, wobei das Verfahren umfasst:
einen Schritt, in dem Hilfsaggregaten, die die Rohstoff-Zuführeinrichtung (2) und die Verbrennungsluft-Zuführeinrichtung (4) einschließen, Strom wenigstens von der ersten Stromversorgungseinrichtung, das heißt nicht von der Stromversorgungseinrichtung (5) für unabhängige Aktivierung, zugeführt wird, um die Hilfsaggregate bei normaler Aktivierung zu aktivieren,
**gekennzeichnet durch**
einen Schritt, in dem den Hilfsaggregaten Strom nur von der Stromversorgungseinrichtung (5) für unabhängige Aktivierung zugeführt wird, um die Hilfsaggregate bei spezieller Aktivierung zu aktivieren, bei der kein Strom von der ersten Stromversorgungseinrichtung zugeführt wird, und ein erstes Maß an Erwärmung, das durch die Verbrennung in dem Brenner (3) bei der speziellen Aktivierung bewirkt wird, so vergrößert, dass es ein zweites Maß an Erwärmung übersteigt, das durch die Verbrennung in dem Brenner (3) bei der normalen Aktivierung bewirkt wird, wobei die normale Aktivierung ein Vorgang ist, bei dem Strom von der ersten Stromversorgungseinrichtung zugeführt wird, und die spezielle Aktivierung ein Vorgang ist, bei dem Strom nur von der Stromversorgungseinrichtung (5) für unabhängige Aktivierung zugeführt wird, und das Maß an Erwärmung die Wärmemenge ist, mit der die Wasserstofferzeugungs-Vorrichtung mittels Verbrennung erwärmt wird,
einen Schritt, in dem Verbrennung in dem Brenner (3) so gesteuert wird, dass ein Maß an Erwärmung ein drittes Maß an Erwärmung erreicht, das geringer ist als das erste Maß an Erwärmung wenn bei der speziellen Aktivierung eine Temperatur des Reformers (1) eine im Voraus eingestellte Temperatur erreicht oder überschreitet oder eine vorgegebene Zeit seit Einleitung von Verbrennung des Brenners (3) verstrichen ist.

## Revendications

1. Appareil de génération d'hydrogène, comprenant :
un reformeur (1) configuré pour reformer une matière première contenant un hydrocarbure afin de générer un gaz contenant de l'hydrogène ;
un dispositif d'alimentation en matière première (2) configuré pour fournir la matière première au reformeur (1) ;
un module de combustion (3) configuré pour brûler au moins l'un, parmi la matière première et le gaz contenant de l'hydrogène, pour chauffer le reformeur (1) ;
un dispositif d'alimentation en air de combustion (4) configuré pour fournir de l'air de combustion au module de combustion (3) ;
une alimentation électrique d'activation indépendante (5) qui est une source d'électricité indépendante d'une première alimentation électrique, l'alimentation électrique d'activation indépendante (5) étant configurée pour fournir de l'électricité au moins au dispositif d'alimentation en matière première (2) et au dispositif d'alimentation en air de combustion (4) ; et
un module de commande (6) configuré pour fournir de l'électricité à des machines auxiliaires, y compris le dispositif d'alimentation en matière première (2) et le dispositif d'alimentation en air de combustion (4), à partir d'au moins la première alimentation électrique autre que l'alimentation électrique d'activation indépendante (5) pour activer les machines auxiliaires pendant une activation typique, fournir de l'électricité aux machines auxiliaires à partir de la seule alimentation électrique d'activation indépendante (5) pour activer les machines auxiliaires pendant une activation spéciale, dans laquelle l'électricité n'est pas fournie par la première alimentation électrique, et
**caractérisé en ce que**
le module de commande (6) est configuré pour commander la combustion dans le module de combustion (3) de telle sorte qu'une première quantité de chauffage produite par la combustion pendant l'activation spéciale devienne supérieure à une deuxième quantité de chauffage produite par la combustion pendant l'activation typique, l'activation typique étant une opération où de l'électricité est fournie par la première alimentation électrique, et l'activation spéciale étant une opération où de l'électricité est fournie uniquement par l'alimentation électrique d'activation indépendante (5), et la quantité de chauffage étant la quantité de chaleur avec laquelle l'appareil de génération d'hydrogène est chauffé par le biais de la combustion, et
où dans le cas où une température du reformeur (1) devient supérieure ou égale à une température fixée à l'avance, ou qu'un temps prédéterminé s'est écoulé depuis le démarrage de la combustion du module de combustion (3) pendant l'activation spéciale, le module de commande (6) est configuré pour commander la combustion dans le module de combustion (3) de sorte qu'une quantité de chauffage devienne une troisième quantité de chauffage qui est inférieure à la première quantité de chauffage.

2. Appareil de génération d'hydrogène selon la revendication 1, comprenant en outre :
un oxydant sélectif (11) configuré pour réduire du monoxyde de carbone dans le gaz contenant de l'hydrogène fourni par le reformeur (1) par une réaction d'oxydation ; et
un dispositif d'alimentation en gaz contenant de l'oxygène (12) configuré pour fournir un gaz contenant de l'oxygène à l'oxydant sélectif (11),
le module de commande (6) étant configuré pour commander la fourniture de gaz contenant de l'oxygène à l'oxydant sélectif (11) à un septième débit pendant l'activation spéciale, et à un huitième débit inférieur au septième débit pendant l'activation typique.

3. Appareil de génération d'hydrogène selon la revendication 2, comprenant en outre :
un détecteur de température d'oxydant sélectif (13) configuré pour détecter une température de l'oxydant sélectif (11),
le module de commande (6) étant configuré pour commander la fourniture du gaz contenant de l'oxygène à l'oxydant sélectif (11) à un neuvième débit inférieur au septième débit dans un cas où la température de l'oxydant sélectif (11) devient supérieure ou égale à une cinquième température ou qu'un cinquième temps s'est écoulé depuis le démarrage de la combustion du module de combustion (3) pendant l'activation spéciale.

4. Appareil de génération d'hydrogène selon l'une quelconque des revendications 1 à 3, dans lequel, lorsque de l'électricité est fournie par la première alimentation électrique autre que l'alimentation électrique d'activation indépendante (5) pendant l'activation spéciale, le module de commande (6) est configuré pour passer de l'activation spéciale à l'activation typique.

5. Appareil de génération d'hydrogène selon la revendication 1, dans lequel, lorsque de l'électricité est fournie par la première alimentation électrique autre que l'alimentation électrique d'activation indépendante (5) et que le temps écoulé depuis le démarrage de la combustion du module de combustion (3) est plus court que le temps prédéterminé pendant l'activation spéciale, le module de commande (6) est configuré pour passer de l'activation spéciale à l'activation typique.

6. Appareil de génération d'hydrogène selon la revendication 1, dans lequel, lorsque de l'électricité est fournie par la première alimentation électrique autre que l'alimentation électrique d'activation indépendante (5) et que la température du reformeur (1) est inférieure à une température prédéterminée pendant l'activation spéciale, le module de commande (6) est configuré pour passer de l'activation spéciale à l'activation typique.

7. Appareil de génération d'hydrogène selon l'une quelconque des revendications 1 à 6, dans lequel, lorsque la fourniture d'électricité par la première alimentation électrique autre que l'alimentation électrique d'activation indépendante (5) est coupée pendant l'activation typique, le module de commande (6) est configuré pour passer de l'activation typique à l'activation spéciale.

8. Appareil de génération d'hydrogène selon la revendication 7, dans lequel le module de commande (6) est configuré pour continuer à surveiller une quantité résiduelle d'électricité de l'alimentation électrique d'activation indépendante (5) après que la fourniture d'électricité par la première alimentation électrique autre que l'alimentation électrique d'activation indépendante (5) pendant l'activation typique est coupée, et lorsque la quantité résiduelle d'électricité de l'alimentation électrique d'activation indépendante (5) est inférieure à la quantité d'électricité qui est nécessaire pour continuer l'activation par l'activation typique, le module de commande (6) est configuré pour passer de l'activation typique à l'activation spéciale.

9. Appareil de génération d'hydrogène selon l'une quelconque des revendications 1 à 8, dans lequel le module de commande (6) est configuré pour détecter la quantité résiduelle d'électricité de l'alimentation électrique d'activation indépendante (5), lorsque la fourniture d'électricité par la première alimentation électrique autre que l'alimentation électrique d'activation indépendante (5) est coupée pendant l'activation typique, et pour arrêter l'opération d'activation lorsque la quantité résiduelle d'électricité détectée de l'alimentation électrique d'activation indépendante (5) est inférieure à la quantité d'électricité nécessaire pour continuer l'activation par le biais de l'activation spéciale.

10. Système de pile à combustible, comprenant :
l'appareil de génération d'hydrogène (15) selon l'une quelconque des revendications 1 à 9 ; et
une pile à combustible (16) configurée pour produire de l'électricité en utilisant un gaz contenant de l'hydrogène qui est fourni par l'appareil de génération d'hydrogène (15),
le module de commande (6) étant configuré pour démarrer la production d'électricité de la pile à combustible (16) lorsque la quantité d'un gaz contenant de l'hydrogène fournie par l'appareil de génération d'hydrogène (15) pendant l'activation typique devient supérieure ou égale à une première quantité d'alimentation, et pour démarrer la production d'électricité de la pile à combustible (16) lorsque la quantité de gaz contenant de l'hydrogène fournie par l'appareil de génération d'hydrogène (15) pendant l'activation spéciale devient supérieure ou égale à une deuxième quantité d'alimentation inférieure à la première quantité d'alimentation de manière à fournir de l'électricité aux machines auxiliaires.

11. Système de pile à combustible, comprenant :
l'appareil de génération d'hydrogène (15) selon l'une quelconque des revendications 1 à 9 ; et
une pile à combustible (16) configurée pour produire de l'électricité en utilisant un gaz contenant de l'hydrogène qui est fourni par l'appareil de génération d'hydrogène (15),
le module de commande (6) étant configuré pour démarrer la production d'électricité de la pile à combustible (16) lorsque la température du reformeur (1) devient supérieure ou égale à une sixième température pendant l'activation typique, et pour démarrer la production d'électricité de la pile à combustible (16) lorsque la température du reformeur (1) devient supérieure ou égale à une septième température inférieure à la sixième température pendant l'activation spéciale de manière à fournir de l'électricité aux machines auxiliaires.

12. Procédé de fonctionnement d'un appareil de génération d'hydrogène comprenant un reformeur (1) configuré pour reformer une matière première qui contient un hydrocarbure afin de générer un gaz contenant de l'hydrogène, un dispositif d'alimentation en matière première (2) configuré pour fournir la matière première au reformeur (1), un module de combustion (3) configuré pour brûler au moins l'un, parmi la matière première et le gaz contenant de l'hydrogène, afin de chauffer le reformeur (1), un dispositif d'alimentation en air de combustion (4) configuré pour fournir de l'air de combustion au module de combustion (3) et une alimentation électrique d'activation indépendante (5) qui est une source d'électricité indépendante d'une première alimentation électrique, l'alimentation électrique d'activation indépendante (5) étant configurée pour fournir de l'électricité au moins au dispositif d'alimentation en matière première (2) et au dispositif d'alimentation en air de combustion (4), le procédé comprenant :
une étape consistant à fournir de électricité aux machines auxiliaires, y compris le dispositif d'alimentation en matière première (2) et le dispositif d'alimentation en air de combustion (4), à partir d'au moins une première alimentation électrique autre que l'alimentation électrique indépendante d'activation (5), afin d'activer les machines auxiliaires lors d'une activation typique ;
**caractérisé par**
une étape consistant à fournir de l'électricité aux machines auxiliaires uniquement à partir de l'alimentation électrique d'activation indépendante (5) pour activer les machines auxiliaires pendant l'activation spéciale, dans laquelle l'électricité n'est pas fournie par la première alimentation électrique, et augmenter une première quantité de chauffage produite par la combustion dans le module de combustion (3) pendant l'activation spéciale pour qu'elle devienne supérieure à une deuxième quantité de chauffage produite par la combustion dans le module de combustion (3) pendant l'activation typique, l'activation typique étant une opération où l'électricité est fournie par la première alimentation électrique, et l'activation spéciale étant une opération où l'électricité est fournie uniquement par l'alimentation électrique d'activation indépendante (5), et la quantité de chauffage étant la quantité de chaleur avec laquelle l'appareil de génération d'hydrogène est chauffé par le biais de la combustion ; et
une étape consistant à commander la combustion dans le module de combustion (3) de sorte qu'une quantité de chauffage devient une troisième quantité de chauffage qui est inférieure à la première quantité de chauffage lorsqu'une température du reformeur (1) devient supérieure ou égale à une température fixée à l'avance, ou qu'un temps prédéterminé s'est écoulé depuis le démarrage de la combustion du module de combustion (3) pendant l'activation spéciale.
